(19) Europäisches Patentamt
European Patent Office
Office européen des brevets

(11) **EP 4 412 357 A1**

(12) **EUROPEAN PATENT APPLICATION**
published in accordance with Art. 153(4) EPC

(43) Date of publication:
**07.08.2024 Bulletin 2024/32**

(21) Application number: **22875442.0**

(22) Date of filing: **17.05.2022**

(51) International Patent Classification (IPC):
**H04W 72/04** *(2023.01)* **H04W 76/10** *(2018.01)*
**H04W 74/08** *(2024.01)*

(52) Cooperative Patent Classification (CPC):
**H04W 72/04; H04W 74/08; H04W 76/10**

(86) International application number:
**PCT/JP2022/020566**

(87) International publication number:
**WO 2023/053562 (06.04.2023 Gazette 2023/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.09.2021 JP 2021159516**

(71) Applicant: **Panasonic Intellectual Property Corporation of America**
**Torrance, CA 90504 (US)**

(72) Inventors:
• **YAMAMOTO, Tetsuya**
  **Kadoma-shi, Osaka 571-0057 (JP)**
• **SUZUKI, Hidetoshi**
  **Kadoma-shi, Osaka 571-0057 (JP)**
• **HORIUCHI, Ayako**
  **Kadoma-shi, Osaka 571-0057 (JP)**
• **NISHIO, Akihiko**
  **Kadoma-shi, Osaka 571-0057 (JP)**

(74) Representative: **Grünecker Patent- und Rechtsanwälte**
**PartG mbB**
**Leopoldstraße 4**
**80802 München (DE)**

(54) **TERMINAL, BASE STATION, AND COMMUNICATION METHOD**

(57) This terminal is equipped with: a control circuit which, for each of a plurality of synchronizing signal blocks, separately controls the settings of a resource for a transmission opportunity associated with each of said plurality of synchronizing signal blocks; and a transmission circuit for transmitting a signal by using a resource.

200

FIG. 7

EP 4 412 357 A1

**Description**

Technical Field

The present disclosure relates to a terminal, a base station, and a communication method.

Background Art

In recent years, a dramatic growth of Internet of Things (IoT) has been expected with the expansion and diversification of radio services as a background. The usage of mobile communication is expanding to all fields such as automobiles, houses, home electric appliances, or industrial equipment in addition to information terminals such as smart phones. In order to support the diversification of services, a substantial improvement in the performance and function of mobile communication systems has been required for various requirements such as an increase in the number of connected devices or low latency in addition to an increase in system capacity. The 5th generation mobile communication systems (5G) has features such as enhanced mobile broadband (eMBB), massive machine type communication (mMTC), and ultra reliable and low latency communication (URLLC), and can flexibly provide radio communication in response to a wide variety of needs.

The 3rd Generation Partnership Project (3GPP) as an international standardizing body has been specifying New Radio (NR) as one of 5G radio interfaces.

Citation List

Non-Patent Literature

NPL 1
3GPP TS38.104 V15.14.0, "NR Base Station (BS) radio transmission and reception (Release 15)," June 2021.
NPL 2
RP-202928, "New WID on NR coverage enhancements," China Telecom, December 2020.
NPL 3
3GPP TS38.211 V16.6.0, "NR Physical channels and modulation (Release 16)," June 2021.
NPL 4
3GPP TS38.212 V16.6.0, "NR Multiplexing and channel coding (Release 16)," June 2021.
NPL 5
3GPP TS38.213 V16.6.0, "NR Physical layer procedures for control (Release 16)," June 2021.
NPL 6
3GPP TS38.214 V16.6.0, "NR Physical layer procedures for data (Release 16)," June 2021.
NPL 7
3GPP TS38.304 V16.5.0, "User Equipment (UE) procedures in Idle mode and RRC Inactive state (Release 16)," June 2021.
NPL 8
3GPP TS38.321 V16.5.0, "NR Medium Access Control (MAC) protocol specification (Release 16)," June 2021.
NPL 9
3GPP TS38.331 V16.5.0, "NR Radio Resource Control (RRC) protocol specification (Release 16)," June 2021.
NPL 10
R2-2107745, "Consideration on Msg. 3 repetition in CE," ZTE Corporation, Sanechips, August 2021.

Summary of Invention

Technical Problem

There is scope for study, however, on a method of improving the resource efficiency in a random access procedure.

A non-limiting and exemplary embodiment of the present disclosure facilitates providing a terminal, a base station, and a communication method each capable of improving the resource efficiency in a random access procedure.

A terminal according to an exemplary embodiment of the present disclosure includes: control circuitry, which, in operation, controls, separately for each of a plurality of synchronization signal blocks, configuration of a resource in a transmission occasion associated with each of the plurality of synchronization signal blocks; and transmission circuitry, which, in operation, transmits a signal using the resource.

It should be noted that general or specific embodiments may be implemented as a system, a method, an integrated circuit, a computer program, a storage medium, or any selective combination thereof.

According to an exemplary embodiment of the present disclosure, it is possible to improve the resource efficiency in a random access procedure.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

Brief Description of Drawings

FIG. 1 illustrates an example of association (mapping) of Synchronization Signal (SS)/Physical Broadcast Channel (PBCH) blocks and Random Access Channel (RACH) preamble resources;
FIG. 2 illustrates another example of association of the SS/ PBCH blocks and the RACH preamble resources;
FIG. 3 illustrates a configuration example of a Physical Random Access Channel (PRACH) mask;
FIG. 4 illustrates an example of association of SS/ PBCH blocks and RACH preamble resources when the PRACH mask is configured in 2-step RACH;
FIG. 5 illustrates an application example of coverage extension (enhancement);
FIG. 6 is a block diagram illustrating an exemplary configuration focused on part of a base station;
FIG. 7 is a block diagram illustrating an exemplary configuration focused on part of a terminal;
FIG. 8 is a block diagram illustrating an exemplary configuration of the base station;
FIG. 9 is a block diagram illustrating an exemplary configuration of the terminal;
FIG. 10 is a flowchart describing an exemplary operation of the terminal;
FIG. 11 illustrates configuration examples of valid SS/ PBCH blocks;
FIG. 12 illustrates an example of grouping SS/ PBCH blocks;
FIG. 13 illustrates exemplary candidates for a combination of the valid SS/ PBCH blocks;
FIG. 14 illustrates an example of association of the valid SS/ PBCH blocks and the RACH preamble resources;
FIG. 15 illustrates another example of association of the valid SS/ PBCH blocks and the RACH preamble resources;
FIG. 16 illustrates yet another example of association of the valid SS/ PBCH blocks and the RACH preamble resources;
FIG. 17 illustrates an exemplary architecture of a 3GPP NR system;
FIG. 18 schematically illustrates a functional split between Next Generation-Radio Access Network (NG-RAN) and 5th Generation Core (5GC);
FIG. 19 is a sequence diagram of a Radio Resource Control (RRC) connection setup/reconfiguration procedure;
FIG. 20 schematically illustrates usage scenarios of enhanced Mobile BroadBand (eMBB), massive Machine Type Communications (mMTC), and Ultra Reliable and Low Latency Communications (URLLC); and
FIG. 21 is a block diagram illustrating an exemplary 5G system architecture for a non-roaming scenario.

Description of Embodiments

Hereinafter, embodiments of the present disclosure will be described in detail with reference to the accompanying drawings.

In NR, for example, in addition to a frequency band of 6 GHz or less, mainly within 700 MHz to 3.5 GHz band (e.g., may be referred to as Frequency Range 1 (FR1)), which has been used for cellular communication, a millimeter-wave band such as 28 GHz or 39 GHz band capable of ensuring a wide band (e.g., may be referred to as FR2) can be utilized (e.g., see Non-Patent Literature (hereinafter referred to as "NPL") 1). Further, for example, in FR1, a high frequency band is possibly used compared with the frequency band used in Long Term Evolution (LTE) or 3rd Generation mobile communication systems (3G) such as 3.5 GHz band.

The higher the frequency band is, the greater a radio wave propagation loss is, and thus, the received quality of radio waves is likely to deteriorate. Hence, in NR, for example, it is expected to ensure almost the same communication area (or coverage) as in the Radio Access Technology (RAT) such LTE or 3G, in other words, to ensure an appropriate communication quality when the high frequency band is used compared with LTE or 3G. In one example, in 3GPP Release 17 (e.g., referred to as "Rel. 17"), a method of improving the coverage in NR has been studied (e.g., see NPL 2).

[Random Access Procedure]

In NR, for example, a terminal (also referred to as, e.g., User Equipment (UE)) may transmit, to a base station (also referred to as, e.g., gNB), a random access channel (RACH) or a Physical Random Access Channel (PRACH) in the following cases: where downlink data or uplink data is produced during an initial access; where on-demand system information (SI) is required; or where a failed beam-connection is recovered (Beam failure recovery). Note that the initial access may be performed in, for example, the following cases: of transitioning from a Radio Resource Control (RRC) IDLE state to an RRC CONNECTED state; of returning from an RRC INACTIVE state to the RRC CONNECTED state; or where an uplink synchronization state is "non-synchronized" during connection (RRC CONNECTED state).

Transmitting RACH makes an attempt to establish connection or re-synchronization from the terminal to the base station. The series of operation performed to establish the connection or the re-synchronization from the terminal to the base station is called "random access procedure (Random Access Procedure)." In NR, for the random access procedure, "4-step RACH" composed of four steps and "2-step RACH" composed of two steps are specified, for example (see, e.g., NPL 8). For example, the 4-step RACH is sometimes referred to as a "Type-1 random access procedure," whereas the 2-step RACH is sometimes referred to as a "Type-2 random access procedure."

In NR, for example, a synchronization signal (SS) and a broadcast channel (Physical Broadcast Channel (PBCH)) may be defined as one unit block (synchronization signal block, which is referred to as, e.g., "SS/PBCH block" or "SSB"). In NR, for example, a configuration is supported in which one SS/PBCH block is transmitted by transmission beams in the same direction and is transmitted by sequentially switching the transmission beams (beamforming). Incidentally, for example, a configuration is possible in which one SS/PBCH block is transmitted by a single beam pattern without applying the beam switching, for a low-frequency band or the like.

When the beamforming is applied to an SS/PBCH block, an equivalent reception beamforming may be applied on a side of the base station in order to receive RACH from the terminal that has received (or detected) this SS/PBCH block. For example, the terminal may transmit a RACH signal, using a resource for RACH associated with the detected SS/PBCH block (e.g., "RACH preamble resource") (see NPL 5 or 8). Alternatively, the terminal may be configured with measurement using a Channel State Information Reference Signal (CSI-RS), and thus, the CSI-RS and the RACH preamble resource may be associated with each other.

[Configuration Example of RACH Preamble Resource]

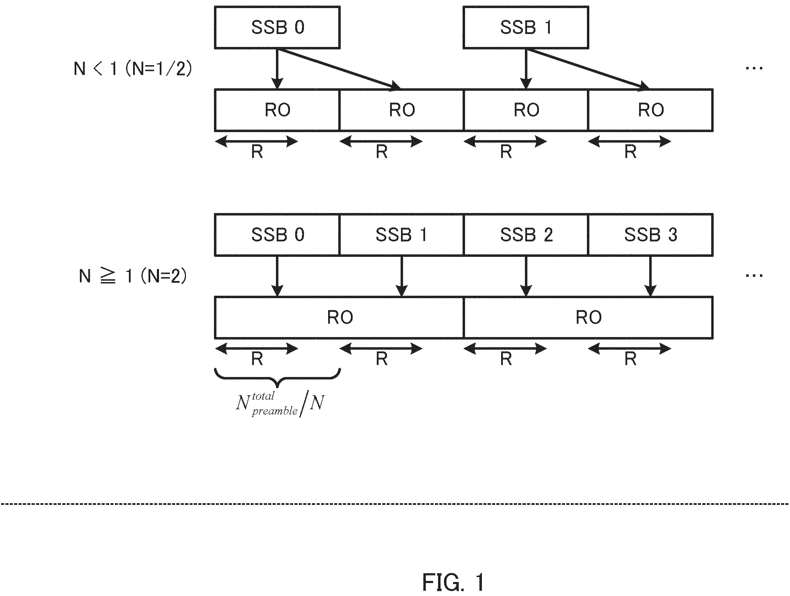

In the following, a description will be given of an example of association (mapping) of SS/PBCH blocks and RACH preamble resources for the 4-step RACH in NR (e.g., see NPL 5). FIG. 1 illustrates an example of association of SS/PBCH blocks and RACH preamble resources.

For example, a terminal is configured with the number of SS/PBCH blocks, "N," corresponding to one RACH Occasion (RO) (also referred to as transmission occasion or PRACH Occasion), and the number of Contention-based (CB) preambles per SS/PBCH block, "R" per RO.

For example, as illustrated in the upper diagram of FIG. 1 (case where N = 1/2), when N < 1, one SS/PBCH block (e.g., each of SSB 0 and SSB 1) is associated with 1/N consecutive ROs (two in upper diagram of FIG. 1). Further, as in the upper diagram of FIG. 1, R CB preambles with consecutive indices corresponding to the SS/PBCH block per RO are configured. Note that, for example, Preamble indices corresponding to the CB preambles may be started from zero (e.g., index corresponding to beginning of each RO).

On the other hand, for example, as illustrated in the lower diagram of FIG. 1 (case where N = 2), when N ≥ 1, N SS/PBCH blocks are associated with one RO. Further, as in the lower diagram of FIG. 1, R CB preambles with consecutive indices corresponding to the SS/PBCH block index, n ($0 \leq n \leq N-1$) per RO, is configured. Here, the Preamble indices corresponding to the n-th SS/PBCH block may be started from "$n \cdot N_{preamble}^{total}/N$." Where $N_{preamble}^{total}$ is the total number of preambles included in an RO and may be an integral multiple of N.

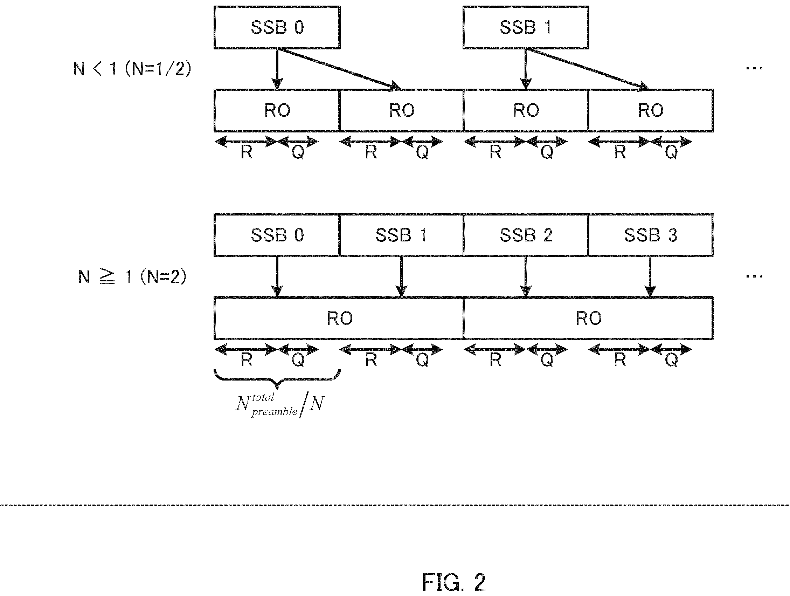

Besides, in NR, for example, the 4-step RACH and the 2-step RACH may share a setting of RACH (e.g., RACH configuration). In this case, for example, a RACH preamble for the 4-step RACH and a RACH preamble for the 2-step RACH may be given by different RACH preamble resources in the same RO (see, e.g., NPL 5). FIG. 2 illustrates an example of association of SS/PBCH blocks and RACH preamble resources when the 4-step RACH and the 2-step RACH share the RACH configuration.

For example, a terminal is configured with the number of SS/PBCH blocks, "N," corresponding to one RACH Occasion (RO), the number of CB preambles, "R" per SS/PBCH block per RO for the 4-step RACH, and the number of CB preambles, "Q" per SS/PBCH block per RO for the 2-step RACH.

For example, as illustrated in the upper diagram of FIG. 2 (case where N = 1/2), when N < 1, one SS/PBCH block (e.g., each of SSB 0 and SSB 1) is associated with 1/N consecutive ROs (two in upper diagram of FIG. 2). Further, as in the upper diagram of FIG. 2, R CB preambles for the 4-step RACH with consecutive indices corresponding to the SS/PBCH block per RO are configured. The Preamble indices of the CB preambles for the 4-step RACH may be started from zero. Furthermore, as in the upper diagram of FIG. 2, Q CB preambles for the 2-step RACH with consecutive indices corresponding to the SS/PBCH block per RO are configured. The Preamble indices of the CB preambles for the 2-step RACH may be started from R (e.g., after CB preamble for 4-step).

On the other hand, as illustrated in the lower diagram of FIG. 2 (case where N = 2), when $N \geq 1$, N SS/PBCH blocks are associated with one RO. Further, as in the lower diagram of FIG. 2, R CB preambles for the 4-step RACH with consecutive indices corresponding to the SS/PBCH block index, n ($0 \leq n \leq$ N-1) per RO, are configured. Here, the Preamble indices of the CB preambles for the 4-step RACH corresponding to the n-th SS/PBCH block may be started from "$n \cdot N_{preamble}^{total}/N$." Where $N_{preambie}^{total}$ is the total number of preambles included in an RO and may be an integral multiple of N.

Furthermore, as in the lower diagram of FIG. 2, Q CB preambles for the 2-step RACH with consecutive indices corresponding to the SS/PBCH block index, n ($0 \leq n \leq$ N-1) per RO, are configured. Here, the Preamble indices of the CB preambles for the 2-step RACH corresponding to the n-th SS/PBCH block may be started from "$n \cdot N_{preamble}^{total}/N +R$."

[Message 3 Transmission]

In the 4-step RACH, for example, a terminal receives a RACH response (also referred to as Random Access Response (RAR) or Message 2 (Msg. 2)) that is transmitted from a base station after transmission of a RACH preamble (also referred to as Message 1 (Msg. 1)). The terminal then transmits, by using an uplink resource indicated by the RAR, for example, an uplink signal (also referred to as, e.g., Message 3 (Msg. 3) or Msg. 3 Physical Uplink Shared Channel (PUSCH)) that includes an RRC connection request, a schedule request, or the like.

In Rel. 17 in NR, as one of the uplink coverage extension techniques (coverage enhancement), it has been studied to apply repeated transmission (Repetition) to Msg. 3 PUSCH, for example (see, e.g., NPL 2). The terminal, for example, measures a received quality based on an SS/PBCH block or a CSI-RS, determines that the coverage extension is applied when the received quality is equal to or less than a threshold, and then requests the Msg. 3 PUSCH repetition to the base station.

Note that the received quality may include, for example, a value such as Reference Signal Received Power (RSRP), Reference Signal Received Quality (RSRQ), or Signal to Interference and Noise Ratio (SINR).

The terminal requesting the Msg. 3 PUSCH repetition may use, for example, a RACH resource that is different from a RACH resource configured for another terminal (e.g., terminal requesting no Msg. 3 PUSCH repetition (e.g., existing terminal)). This allows the base station to identify the terminal requesting the Msg. 3 PUSCH repetition, based on a resource with which the RACH preamble has been received. The base station may indicate via RAR, to the terminal requesting the Msg. 3 PUSCH repetition, whether to apply the Repetition actually or the number of times of Repetition, based on a parameter including the received quality of the RACH preamble, for example.

Here, in configuration of the RACH resource for the terminal requesting the Msg. 3 PUSCH repetition, it has been studied to share RACH configuration that is configured for another terminal (e.g., terminal requesting no Repetition), as in the configuration of the RACH preamble for the 4-step RACH and the configuration of the RACH preamble for the 2-step RACH. For example, a different preamble resource in the same RO as for a RACH preamble resource for another terminal may be reserved (ensured) for a RACH preamble for the terminal requesting the Msg. 3 PUSCH repetition.

For example, as with the RACH preamble resource for the 2-step RACH mentioned above, when a RACH preamble resource that is different from a RACH preamble resource for another terminal is reserved for the terminal requesting the Msg. 3 PUSCH repetition, RACH preambles per RO may be strained.

Further, in Rel. 17, in addition to reserving a RACH preamble resource for the terminal requesting the Msg. 3 PUSCH repetition, it has been also studied to support a plurality of different functions directed for the following: e.g., a simple and low-cost terminal with reduced minimum bandwidth or terminal power consumption by decreasing the number of antennae compared to a common terminal such as a smart phone (e.g., "Reduced Capability (RedCap) terminal"); a terminal that transmits a small amount of data in the process of the Random Access Procedure (e.g., "Small Data Transmission (SDT) terminal"); and Radio Access Network (RAN) slicing. For example, it has been studied to reserve a RACH preamble resource respectively for the plurality of different functions. In this case, RACH preambles may be strained more remarkably.

For example, in the 2-step RACH of Rel. 16, when one SS/PBCH block is associated with 1/N consecutive ROs (case where N < 1), it is possible to apply configuration which allows RACH transmission for the 2-step RACH in a portion (subset) of the N ROs associated with the same SS/PBCH block (e.g., configuration of PRACH mask).

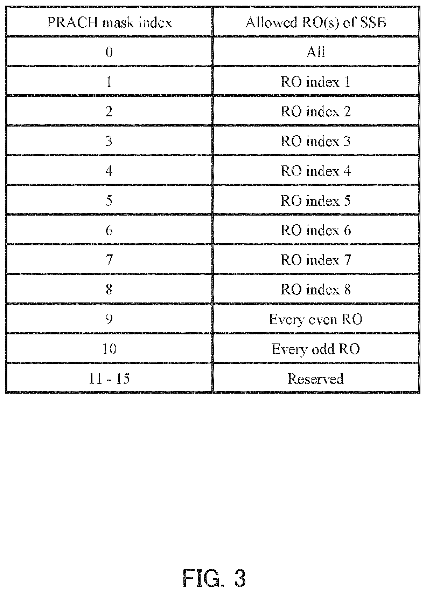

FIG. 3 illustrates a configuration example of the PRACH mask (e.g., configuration of RO for which RACH transmission is allowed). In FIG. 3, for example, a plurality of candidates for the configuration of the PRACH mask and information for identifying the respective candidates (PRACH mask index) are associated with each other.

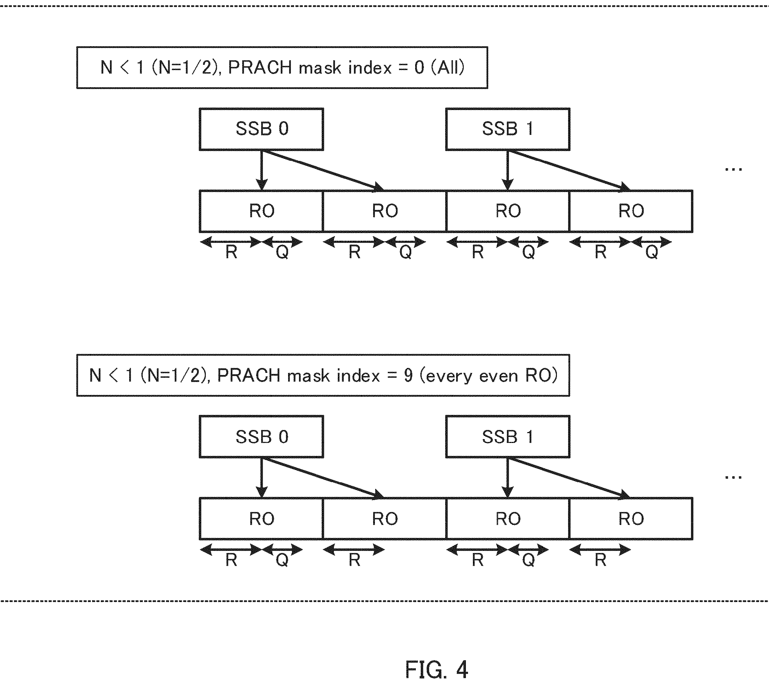

FIG. 4 illustrates an example of association of SS/PBCH blocks and RACH preamble resources when the PRACH mask is configured in the 2-step RACH.

As illustrated in the upper diagram of FIG. 4, when PRACH mask index = 0, Q CB preambles for the 2-step RACH are configured for all of 1/N ROs (two ROs in FIG. 4) that are associated with the same SS/PBCH block. Further, as illustrated in the lower diagram of FIG. 4, when PRACH mask index = 9, Q CB preambles for the 2-step RACH are configured for some (e.g., RO of even index) of 1/N ROs (two ROs in FIG. 4) that are associated with the same SS/PBCH block. In other words, in the lower diagram of FIG. 4, among the 1/N ROs (two ROs in FIG. 4) that are associated with the same SS/PBCH block, an RO of an odd index is not configured with the CB preamble for the 2-step RACH.

In this manner, Q CB preambles for the 2-step RACH are configured for a portion (subset) of 1/N ROs associated with the same SS/PBCH block, so that CB preambles for the 2-step RACH need not be reserved for other ROs associated with the same SS/PBCH block, thus making it possible to suppress the strain of RACH preambles.

When the above-mentioned PRACH mask is applied here, in the association of SS/PBCH blocks and RACH preamble resources in Rel. 15 and Rel. 16, a CB preamble is reserved for both the 4-step RACH and the 2-step RACH in at least one of a plurality of ROs associated with an SS/PBCH block. That is, association with an RO (e.g., CB preamble resource) is configured for all SS/PBCH block indices.

On the other hand, the Msg. 3 PUSCH repetition need not be applied in the areas covered by the respective SS/PBCH blocks, but may be applied in areas covered by some of the SS/PBCH blocks (e.g., NPL 10).

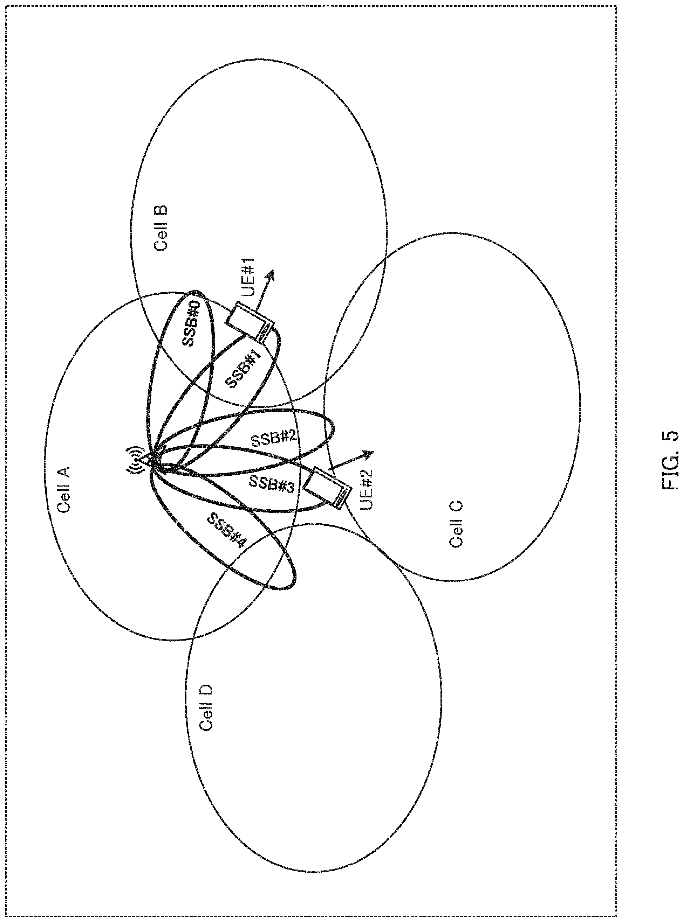

For example, a case will be described where Cell A to Cell D are installed, as illustrated in FIG. 5. In FIG. 5, since a cell-edge of Cell A overlaps the coverage of Cell B, when a terminal moves from Cell A to Cell B, the terminal can switch a connection cell to Cell B at an appropriate timing without applying coverage extension by Cell A. Therefore, the Msg. 3 PUSCH repetition need not be applied to the areas covered by SS/PBCH block #0 (SSB #0) and SS/PBCH block #1 (SSB #1) that overlap the coverage of Cell B.

On the other hand, in FIG. 5, there is a boundary gap (coverage hole) between the coverage of Cell A and the coverage of Cell C. Accordingly, when the terminal moves from Cell A to Cell C, coverage extension by Cell A (or Cell C) may be applied to a terminal in this area. Therefore, the Msg. 3 PUSCH repetition may be applied to areas covered by SS/PBCH block #2 (SSB #2) and SS/PBCH block #3 (SSB #3) corresponding to that area.

Even when the PRACH mask configuration for the 2-step RACH is used, in the association of SS/PBCH blocks and RACH preamble resources in Rel. 15 and Rel. 16, the association with an RO (e.g., RACH preamble resource) is configured for all SS/PBCH blocks (e.g., SS/PBCH block indices) in both the 4-step RACH and the 2-step RACH. For example, as illustrated in FIG. 5, among the plurality of SS/PBCH blocks, an RO or a RACH preamble resource in the RO is reserved even for SS/PBCH blocks for which the coverage extension need not be configured (e.g., SSB #0 and SSB #1), which may lead to a decrease in utilization efficiency of RACH preamble resources.

In a non-limiting example of the present disclosure, a description will be given of a method of improving the utilization efficiency of RACH preamble resources when the Msg. 3 PUSCH repetition is applied.

For example, a base station may separately control, for each of a plurality of SS/PBCH blocks, configuration of a RACH preamble resource associated with each of the plurality of SS/PBCH blocks. For example, RACH preamble resources corresponding to some SS/PBCH blocks that cover coverage areas requiring application of the Msg. 3 PUSCH repetition may be reserved, whereas RACH preamble resources corresponding to the other SS/PBCH blocks need not be reserved. This allows a terminal to appropriately request the Msg. 3 PUSCH repetition to the base station, with the RACH preambles, and to suppress the strain of RACH preamble resources.

In the following, some embodiments will be described.

[Overview of Communication System]

A communication system according to each embodiment of the present disclosure includes, for example, at least one base station and at least one terminal.

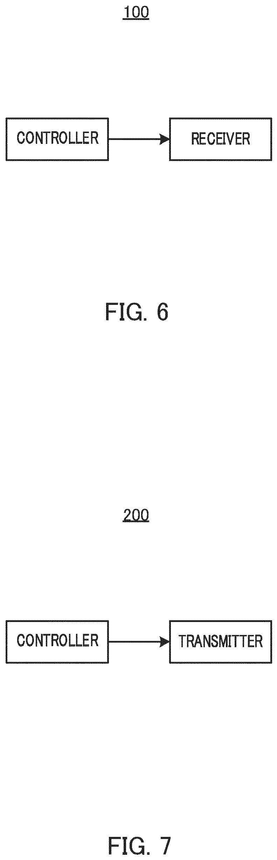

FIG. 6 is a block diagram illustrating an exemplary configuration focused on part of base station 100 according to an example of the present disclosure, and FIG. 7 is a block diagram illustrating an exemplary configuration focused on part of terminal 200 according to an example of the present disclosure.

In base station 100 illustrated in FIG. 6, a controller (e.g., corresponding to control circuitry) controls, separately for each of a plurality of SS/PBCH blocks (e.g., synchronization signal blocks), configuration of a RACH resource (resource for Random access) associated with each of the plurality of SS/PBCH blocks. A receiver (e.g., corresponding to reception circuitry) receives a signal for Random access (e.g., RACH preamble) using the RACH resource.

In terminal 200 illustrated in FIG. 7, a controller (e.g., corresponding to control circuitry) controls, separately for each of a plurality of SS/PBCH blocks (e.g., synchronization signal blocks), configuration of a RACH resource (resource for Random access) associated with each of the plurality of SS/PBCH blocks. A transmitter (e.g., corresponding to transmission circuitry) transmits a signal for Random access (e.g., RACH preamble) using the RACH resource.

(Embodiment 1)

[Configuration of Base Station]

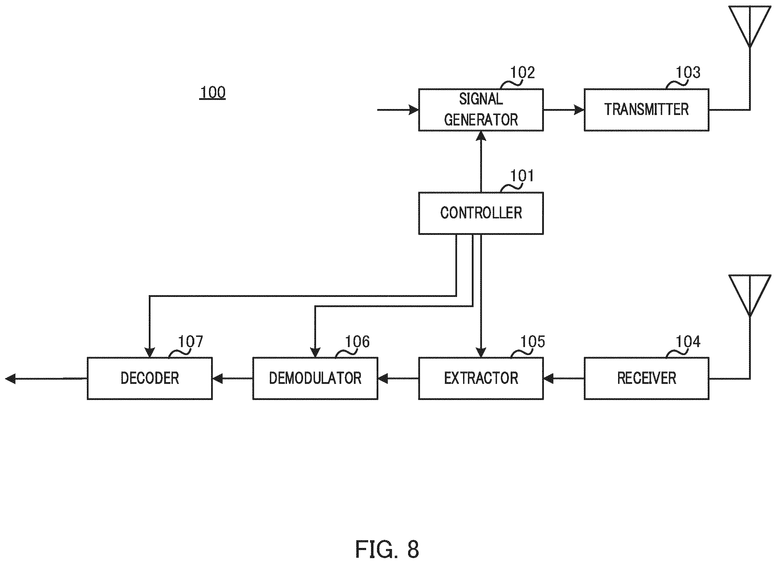

FIG. 8 is a block diagram illustrating an exemplary configuration of base station 100. The exemplary configuration of base station 100 illustrated in FIG. 8 may be common throughout the present disclosure including other embodiments and variations to be described later.

As illustrated in FIG. 8, base station 100 may include, for example, controller 101, signal generator 102, and transmitter 103. Base station 100 may further include, for example, receiver 104, extractor 105, demodulator 106, and decoder 107.

At least one of controller 101, signal generator 102, extractor 105, demodulator 106, and decoder 107 which are illustrated in FIG. 8 may be included in the controller illustrated in FIG. 6, for example. Further, receiver 104 which is illustrated in FIG. 8 may be included in the receiver illustrated in FIG. 6, for example.

Controller 101, for example, determines at least one of information on reception of an SS/PBCH block and a System Information Block (SIB), and information on a RACH resource (including therein, e.g., RACH preamble resource) in terminal 200, and outputs the determined information to signal generator 102. The information on the reception of the SS/PBCH block and SIB may include information on a radio resource with which terminal 200 receives the SS/PBCH block and SIB. The information on the RACH resource may include information on association of the SS/PBCH blocks and the RACH resources.

Controller 101 determines, for example, a Random access Procedure method of terminal 200, based on a method to be described later. Additionally, controller 101 may determine a RACH resource corresponding to the Random Access Procedure method, based on a method to be described later. Controller 101 outputs the determined information to signal generator 102, extractor 105, demodulator 106, and decoder 107, for example.

Signal generator 102 generates, for example, an SS/PBCH block and an SIB bit sequence (bit string), using the information input from controller 101. Signal generator 102 may perform, for example, encoding on the SS/PBCH block and the SIB bit sequence as needed. The SIB bit sequence may include, for example, the information, which is input from controller 101, on the association of the SS/PBCH blocks and the RACH resources.

Signal generator 102 may modulate the SS/PBCH block or the SIB bit sequence (e.g., encoded bit sequence) so as to generate a symbol sequence, and then map the symbol sequence to the radio resource indicated by controller 101. Signal generator 102 outputs, to transmitter 103, the signal to which the symbol sequence has been mapped.

Transmitter 103 performs, for example, transmission-waveform generation processing such as orthogonal Frequency Division Multiplexing (OFDM) on the signal output from signal generator 102. In the case of an OFDM transmission using a cyclic prefix (CP), transmitter 103 may add the CP to the signal resulting from Inverse Fast Fourier Transform (IFFT).

Further, transmitter 103 performs, for example, radio (e.g., radio frequency (RF)) processing such as Digital-Analog (D/A) conversion and/or up-conversion on the signal output from signal generator 102, and then outputs the resultant radio signal to terminal 200 via an antenna.

Receiver 104 performs, for example, RF processing such as down-conversion and/or Analog-Digital (A/D) conversion on an uplink signal received from terminal 200 via an antenna. Further, in the case of the OFDM transmission, receiver 104 applies the FFT to a received signal so as to generate a frequency-domain signal, and then outputs the signal to extractor 105.

Extractor 105 extracts, from the received signal, a radio resource part with which a PRACH signal (e.g., RACH preamble) or a Msg. 3 PUSCH signal has been transmitted, based on the information input from controller 101, and then outputs the extracted signal to demodulator 106.

Demodulator 106, for example, demodulates the signal input from extractor 105, based on the information input from controller 101, and then outputs a demodulation result to decoder 107.

Decoder 107, for example, performs detection of PRACH or error correction decoding on Msg. 3 PUSCH, using the information input from controller 101 and the demodulation result input from demodulator 106, and thereby obtains a detection result or a received bit sequence after the decoding.

[Configuration of Terminal]

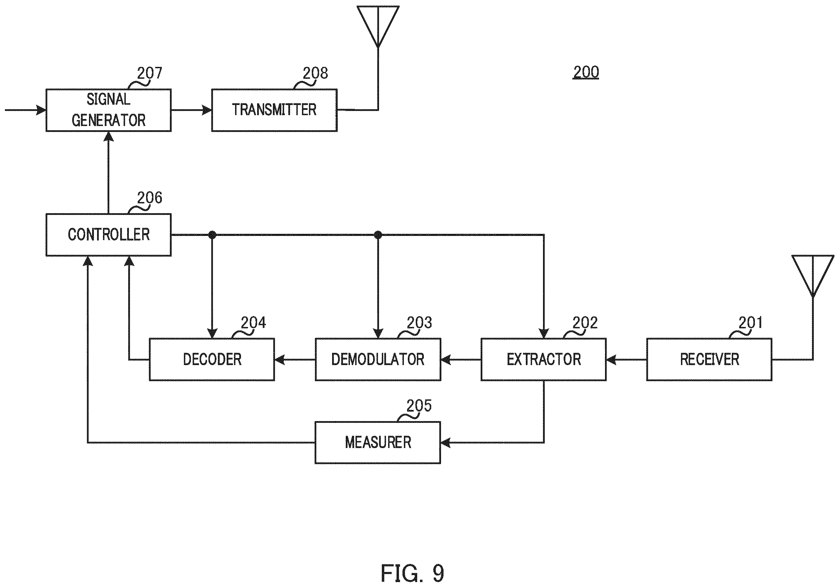

Next, an exemplary configuration of terminal 200 will be described with reference to FIG. 9. As illustrated in FIG. 9, terminal 200 may include receiver 201, extractor 202, demodulator 203, decoder 204, measurer 205, and controller 206. Terminal 200 may further include signal generator 207 and transmitter 208.

At least one of extractor 202, demodulator 203, decoder 204, measurer 205, controller 206, and signal generator 207 which are illustrated in FIG. 9 may be included in the controller illustrated in FIG. 7, for example. Further, transmitter 208 which is illustrated in FIG. 9 may be included in the transmitter illustrated in FIG. 7, for example.

Receiver 201 receives via an antenna, for example, a data signal or a downlink control signal transmitted from base station 100, performs the RF processing such as the down-conversion and/or the A/D conversion on the received radio signal, thereby generating a baseband signal. Further, when receiving an OFDM signal, receiver 201 performs the FFT processing on the received signal to convert the received signal into that in the frequency domain.

Extractor 202, for example, extracts, from the received signal input from receiver 201, a radio resource part, which includes an SS/PBCH block or SIB, using information on a radio resource for a control signal input from controller 206, and then outputs the extracted signal to demodulator 203 and measurer 205.

Demodulator 203, for example, demodulates the signal input from extractor 202, based on information received from controller 206, and outputs a demodulation result to decoder 204.

Decoder 204, for example, performs error correction decoding on PBCH or SIB, using the information input from controller 206 and the demodulation result input by demodulator 203, thereby obtaining control information included in PBCH (including therein, e.g., Master Information Block (MIB)) or SIB. Decoder 204 may output the obtained control information to controller 206, for example.

Measurer 205, for example, may measure a received quality, such as RSRP or RSRQ, using the input from the extractor 202. Measurer 205 outputs information on the measured received quality (e.g., RSRP or RSRQ) to controller 206.

Controller 206 controls (e.g., determines) selection of the Random access procedure method and configuration of the RACH resource (e.g., CB preamble) in accordance with a method to be described later, based on the information, which is obtained from MIB or SIB, on the association of the SS/PBCH blocks and the RACH resources and the information, which is input from measurer 205, on the received quality. Controller 206, for example, outputs the determined information to signal generator 207.

Further, Controller 206, for example, determines information on a radio resource for the control signal and then outputs the determined information to extractor 202, demodulator 203, and decoder 204.

Signal generator 207 may, for example, generate a PRACH signal (e.g., Msg. 1) or a Msg. 3 PUSCH signal, using the information input from controller 206. Signal generator 207, for example, maps the generated signal to the radio resource indicated from controller 206 and then outputs, to transmitter 208, the signal after mapping. Incidentally, signal generator 207 may, for example, perform encoding processing and modulation processing on the generated signal.

Transmitter 208, for example, performs transmission signal-waveform generation such as OFDM on the signal input from signal generator 207. In addition, in the case of the OFDM transmission using the CP, for example, transmitter 208 may add the CP to the signal after the IFFT. Alternatively, when a single-carrier waveform is generated, a Discrete Fourier Transform (DFT) processing may be performed at a rear stage of the modulation processing or a front stage of the signal assignment.

Further, transmitter 208 performs, for example, the RF processing such as the D/A conversion and/or the up-conversion on the transmission signal, and then outputs the resultant radio signal via an antenna.

[Operation Examples of Base Station 100 and Terminal 200]

Descriptions will be given of operation examples of base station 100 and terminal 200 that have the above configurations.

In the present embodiment, it is assumed that the same system information (e.g., SIB) is transmitted from a plurality of SS/PBCH blocks, as in Rel. 15 and Rel. 16.

In the present embodiment, base station 100 and terminal 200 may, for example, separately configure, for each of a plurality of SS/PBCH blocks, a RACH resource (e.g., RACH preamble resource for requesting Msg. 3 PUSCH repetition) in an RO associated with each of the plurality of SS/PBCH blocks configured for terminal 200. For example, base station 100 and terminal 200 may, for example, vary configuration of the RACH resource (e.g., whether to reserve or not) per SS/PBCH block.

In the present embodiment, for example, terminal 200 may be given information on an SS/PBCH block including association with a RACH resource configured for terminal 200 requesting the Msg. 3 PUSCH repetition (e.g., referred to as "valid SS/PBCH block"). For example, each of a plurality of SS/PBCH blocks configured for terminal 200 may be configured to any of a valid SS/PBCH block and an SS/PBCH block including no association with a RACH resource (e.g., referred to as "invalid SS/PBCH block"). In other words, the plurality of SS/PBCH blocks configured for terminal 200 may include a valid SS/PBCH block for which a RACH preamble resource for requesting the Msg. 3 PUSCH repetition is configured (or reserved) in a corresponding RO and an invalid SS/PBCH block for which no RACH preamble resource for requesting the Msg. 3 PUSCH repetition is configured (or reserved) in a corresponding RO.

For example, the information on a valid SS/PBCH block (or information on association of valid SS/PBCH block and RACH preamble resource) may be indicated from base station 100 to terminal 200. For example, terminal 200 may configure, based on the information indicated from base station 100, a RACH preamble resource in an RO corresponding to the valid SS/PBCH block and need not configure a RACH preamble resource in an RO corresponding to the invalid SS/PBCH block, of the plurality of SS/PBCH blocks.

The information on the valid SS/PBCH block may be, for example, information indicating whether each of the plurality of SS/PBCH blocks is a valid SS/PBCH block (hereinafter referred to as "valid SS/PBCH block index pattern (SS/PBCH block mask index)" or "SSB mask index"). The valid SS/PBCH block index pattern is, for example, a parameter that indicates an SS/PBCH block including the association with a RACH resource.

Terminal 200 may request the Msg. 3 PUSCH repetition, using a RACH preamble resource associated with a portion (subset) of SS/PBCH blocks that has been configured to be valid in the valid SS/PBCH block index pattern, for example. In other words, terminal 200, for example, requests no Msg. 3 PUSCH repetition, using a RACH preamble resource associated with an SS/PBCH block that has been configured to be not valid (or invalid) in the valid SS/PBCH block index pattern.

Thus, according to the present embodiment, some (subset) SS/PBCH blocks (e.g., valid SS/PBCH blocks) of the plurality of SS/PBCH blocks can be reserved for terminal 200, which allows terminal 200 to appropriately request the Msg. 3 PUSCH repetition. Further, according to the present embodiment, terminal 200 need not reserve a RACH preamble resource associated with an invalid SS/PBCH block, thereby suppressing the strain of RACH preambles.

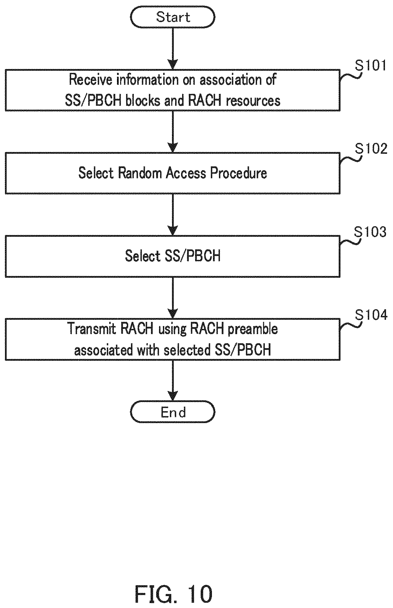

FIG. 10 is a flowchart describing an exemplary operation of terminal 200.

As illustrated in FIG. 10, terminal 200 receives information on association of SS/PBCH blocks and RACH resources, for example (S101). The information on the association of the SS/PBCH blocks and the RACH resources may include, for example, information on association of SS/PBCH blocks and RACH preamble resources, and a valid SS/PBCH block index pattern. The valid SS/PBCH block index pattern may be indicated from base station 100 to terminal 200 by an SIB, for example. An exemplary indication method of the valid SS/PBCH block index pattern will be described later.

Terminal 200, for example, selects (or determines) a Random access procedure method (S102). The Random access procedure method may include, for example, the 4-step RACH, the 2-step RACH, and the Msg. 3 PUSCH repetition. An exemplary selection of the Random access procedure method will be described later.

Terminal 200, for example, selects an SS/PBCH block based on the information on the association of the SS/PBCH blocks and the RACH resources and the Random access procedure method (S103). An exemplary selection of the SS/PBCH block will be described later.

Terminal 200 transmits RACH using the RACH preamble resource associated with the selected SS/PBCH block (S104).

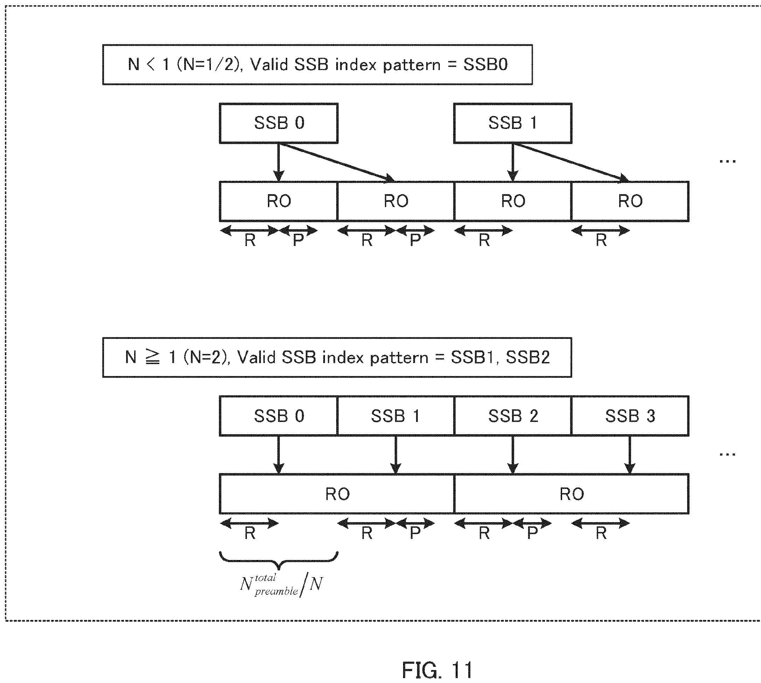

FIG. 11 illustrates configuration examples of valid SS/ PBCH blocks. FIG. 11 illustrates an example in which SS/PBCH block #0 (SSB 0) is indicated as a valid SS/PBCH block index (upper diagram) and an example in which SS/PBCH block #1 (SSB 1) and SS/PBCH block #2 (SSB 2) are indicated thereas (lower diagram).

Further, in FIG. 11, the number of CB preambles "R" per SS/PBCH block (or SS/PBCH block index) per RO for the 4-step RACH and the number of CB preambles "P" per SS/PBCH block per RO for a RACH preamble for requesting the Msg. 3 PUSCH repetition are configured.

As illustrated in the upper diagram of FIG. 11, in a case of the number of SS/PBCH blocks N < 1 (e.g., a case where N = 1/2) corresponding to one RACH Occasion (RO), one SS/PBCH block (e.g., each of SSB 0 and SSB 1) is associated with 1/N consecutive ROs (two ROs in upper diagram of FIG. 11). Further, as in the upper diagram of FIG. 11, when the valid SS/PBCH block is SSB 0, P CB preambles for the Msg. 3 PUSCH repetition are configured for each of the N ROs corresponding to SSB 0. On the other hand, as illustrated in the upper diagram of FIG. 11, the CB preamble for the Msg. 3 PUSCH repetition is not configured for each of N ROs corresponding to SSB 1 that is not a valid SS/PBCH block.

Meanwhile, as illustrated in the lower diagram in FIG. 11, in a case of the number of SS/PBCH blocks N ≥ 1 (e.g., case where N = 2) corresponding to one RACH Occasion (RO), N SS/PBCH blocks (two blocks in lower diagram in FIG. 11) are associated with one RO. Further, as illustrated in the lower diagram in FIG. 11, when the valid SS/PBCH blocks are SSB 1 and SSB 2, P CB preambles for the Msg. 3 PUSCH repetition corresponding to each of SSB 1 and SSB 2 are configured for each of ROs respectively corresponding to SSB 1 and SSB 2. On the other hand, as illustrated in the lower diagram of FIG. 11, for ROs respectively corresponding to SSB 0 and SSB3 that are not valid SS/PBCH blocks, the CB preamble for the Msg. 3 PUSCH repetition corresponding to each of SSB 0 and SSB3 is not configured.

As illustrated in FIG. 11, ROs associated with a portion (subset) of the plurality of SS/PBCH blocks or RACH preamble resources in the ROs are reserved, whereas RACH preamble resources corresponding to the other SS/PBCH blocks are not reserved. For example, base station 100 may configure an SS/PBCH block, for which the coverage extension (e.g., Msg. 3 PUSCH repetition) is configurable, to a valid SS/PBCH block and may configure the other SS/PBCH blocks to invalid SS/PBCH blocks. Thus, the RO associated with the SS/PBCH block for which the coverage extension need not be configured or the RACH preamble resource in the RO is not reserved, so that the utilization efficiency of RACH preamble resources can be improved.

Incidentally, when no valid SS/PBCH block index pattern is configured for terminal 200 by an SIB (e.g., prior to configuration), terminal 200 may determine that all SS/PBCH blocks are valid SS/PBCH blocks, for example.

[Indication Example of Valid SS/PBCH Block Index Pattern]

Hereinafter, an indication example of information on a valid SS/PBCH block index pattern will be described.

<Option 1: Bitmap Indication>

In Option 1, information on a valid SS/PBCH block index pattern (information on valid SS/PBCH block) may include, for example, bitmap-format information indicating whether each of the plurality of SS/PBCH blocks is a valid SS/PBCH block.

For example, when the number of SS/PBCH blocks is L, base station 100 may indicate, to terminal 200, a valid SS/PBCH block index pattern, using bitmap of L bits.

For example, the l-th ($0 \leq 1 < L-1$) bit of the bitmap may correspond to the SS/PBCH blocking of the index l. When a bit value is one, for example, terminal 200 may determine that the SS/PBCH block of the corresponding index is valid, and when the bit value is zero, terminal 200 may determine that the SS/PBCH block of the corresponding index is invalid.

Alternatively, when the bit value is zero, for example, terminal 200 may determine that the SS/PBCH block of the corresponding index is valid, and when the bit value is one, terminal 200 may determine that the SS/PBCH block of the corresponding index is invalid.

According to the indication method of Option 1, a valid SS/PBCH block can be flexibly configured per SS/PBCH block.

<Option 2: Bitmap Indication using SS/PBCH Block Group>

In Option 2, the information on a valid SS/PBCH block index pattern (information on valid SS/PBCH block) may include, for example, bitmap-format information indicating whether each of a plurality of groups (also each referred to as, e.g., "SS/PBCH block group") obtained by grouping a plurality of SS/PBCH blocks includes a valid SS/PBCH block.

For example, in a case where the number of SS/PBCH blocks is L, L SS/PBCH blocks may be grouped into L' ($< L$) groups (SS/PBCH block groups) including SS/PBCH blocks with at least one SS/PBCH block index. The SS/PBCH blocks included in the SS/PBCH block group may be, for example, SS/PBCH blocks with consecutive SS/PBCH block indices or may be SS/PBCH blocks with non-consecutive SS/PBCH block indices.

For example, base station 100 may indicate, to terminal 200, a valid SS/PBCH block index pattern, using a bitmap of L' bits.

For example, the l'-th ($0 \leq l' < L'-1$) bit of the bitmap may correspond to the SS/PBCH block group of the indexed l'. When a bit value is one, for example, terminal 200 may determine that the SS/PBCH blocks included in the SS/PBCH block group of the corresponding index are valid, and when the bit value is zero, terminal 200 may determine that the SS/PBCH blocks included in the SS/PBCH block group of the corresponding index are invalid.

Alternatively, when the bit value is zero, for example, terminal 200 may determine that the SS/PBCH blocks included in the SS/PBCH block group of the corresponding index are valid, and when the bit value is one, terminal 200 may determine that the SS/PBCH blocks included in the SS/PBCH block group of the corresponding index are invalid.

The grouping of SS/PBCH blocks may be previously defined by standards or may be configured for terminal 200 in advance.

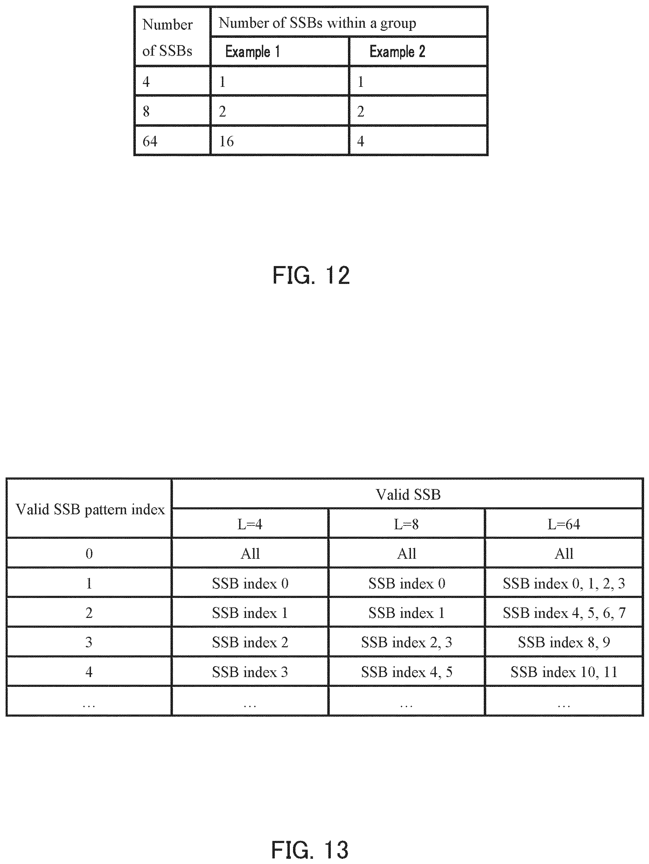

FIG. 12 illustrates an example of grouping of SS/PBCH blocks in Option 2.

Example 1 of FIG. 12 is an example in which the number of bits, L', of the bit map corresponding to an SS/PBCH block group is configured to a fixed value (four bits in Example 1). In Example 1, for example, depending on the number of SS/PBCH blocks to be configured, L (e.g., any of L = 4, 8, and 64), the number of SS/PBCH blocks included in the SS/PBCH block group may be determined. Note that, in Example 1, the bit number of the bit map, L', is not limited to four bits and may be any other number of bits.

Example 2 of FIG. 12 is an example in which the number of bits, L', of the bitmap corresponding to an SS/PBCH block group is varied between the number of SS/PBCH blocks, L (e.g., L = 4 and L = 8), that is configurable in FR1 and the number of SS/PBCH blocks L (e.g., L = 64) that is configurable in FR2. For example, in FR1 (e.g., L = 4 and L = 8), the number of bits, L', of the bitmap corresponding to the SS/PBCH block group is set to 4 bits, and in FR2 (e.g., L = 64), the number of bits, L', of the bitmap corresponding to the SS/PBCH block group is set to 16 bits. Note that, in Example 2, the number of bits, L', or the magnitude relationship of the bit map is not limited to these and may be any other number of bits.

Note that the grouping of SS/PBCH blocks is not limited to Example 1 and Example 2 illustrated in FIG. 12.

According to the indication method of Option 2, the number of indication bits of a valid SS/PBCH block index pattern can be reduced as compared to Option 1.

<Option 3: Indication with Table>

In Option 3, the information on a valid SS/PBCH block index pattern (information on valid SS/PBCH block) may include, for example, information (e.g., index) for identifying any one of a plurality of candidates for a combination of valid SS/PBCH blocks in a plurality of SS/PBCH blocks.

For example, association (e.g., table-format information) of a plurality of candidates for a combination of valid SS/PBCH blocks and information (e.g., index) for identifying the plurality of candidates may be configured for terminal 200. Such association may be defined by standards or may be configured (e.g., indicated by MIB) for terminal 200 in advance. Base station 100 may indicate, to terminal 200, any one of the plurality of candidates for the combination of the valid SS/PBCH blocks, using several bits of an SIB, for example.

FIG. 13 illustrates examples of the candidates for a combination of the valid SS/PBCH blocks (e.g., Valid SS/PBCH block table) in Option 3. In the example of FIG. 13, depending on the number of SS/PBCH blocks, L (e.g., any of L = 4, L = 8, and L = 64), one or a plurality of valid SS/PBCH blocks is configured. Further, as illustrated in FIG. 13, an index (e.g., Valid SSB pattern index) is associated with each of the candidates for the combination of the valid SS/PBCH blocks. For example, in FIG. 13, a value of the Valid SSB pattern index, m (m = 0, 1, 2, and so forth), corresponds to the candidate for the (m+1)-th combination of the valid SS/PBCH blocks from the top in the Valid SS/PBCH block table.

Base station 100 may select, from the Valid SS/PBCH block table illustrated in FIG. 13, one combination of the valid SS/PBCH blocks and indicate a Valid SSB pattern index corresponding to the selected combination to terminal 200, for example.

According to the indication method of Option 3, it is possible to reduce the number of indication bits and to flexibly configure a valid SS/PBCH block in accordance with the station placement, as compared to the case where the valid SS/PBCH block index itself is indicated.

The information to be indicated from base station 100 to terminal 200 need not be the Valid SSB pattern index itself illustrated in FIG. 13 and may be information giving a Valid SSB pattern index. In addition, the candidates for the combination of the valid SS/PBCH blocks are not limited to being specified (or configured) as the Valid SS/PBCH block table as in FIG. 13, but a parameter set including a combination of valid SS/PBCH blocks may be specified.

The combination of the valid SS/PBCH blocks is not limited to the example illustrated in FIG. 13 and may be another combination.

The indication example of a valid SS/PBCH block index pattern has been described, thus far.

[Example of Association of Valid SS/PBCH Blocks and RACH preamble resources]

In the following, a description will be given of an example of association of valid SS/PBCH blocks and RACH preamble resources for requesting the Msg. 3 PUSCH repetition.

When the Msg. 3 PUSCH repetition and the 4-step RACH (or 2-step RACH) share RACH configuration, a RACH preamble for the 4-step RACH, a RACH preamble for the 2-step RACH, and a RACH preamble for requesting the Msg. 3 PUSCH repetition may be given by different preamble resources in the same RO, for example.

By way of example, terminal 200 may be configured with the number of SS/PBCH blocks, "N," corresponding to one RACH Occasion (RO), the number of CB preambles, "R" per SS/PBCH block per RO for the 4-step RACH, the number of CB preambles, "Q" per SS/PBCH block per RO for the 2-step RACH, and the number of CB preambles, "P" per SS/PBCH block per RO for a RACH preamble for requesting the Msg. 3 PUSCH repetition.

In the following, a description will be given of a configuration example of a RACH preamble resource corresponding to a valid SS/PBCH block and used for requesting the Msg. 3 PUSCH repetition.

<Option 1>

In Option 1, a RACH preamble for requesting the Msg. 3 PUSCH repetition may be configured following a RACH preamble resource for the 4-step RACH (or 2-step RACH). For example, a RACH preamble index for requesting the Msg. 3 PUSCH repetition may be reserved (i.e., started) immediately after a RACH preamble index (e.g., earlier reserved index) for the 4-step RACH (or 2-step RACH).

For example, when N < 1, one SS/PBCH block may be associated with 1/N consecutive ROs, and a CB preamble for the 4-step RACH with R consecutive indices corresponding to an SS/PBCH block per RO may be configured (or reserved). The preamble indices of the CB preamble for the 4-step RACH may be started from zero (e.g., corresponding to first index of RO), for example. Further, for example, a CB preamble for the 2-step RACH with Q consecutive indices corresponding to an SS/PBCH block per RO may be configured (or reserved). The preamble indices of the CB preamble for the 2-step RACH may be started from R (e.g., after CB preamble for 4-step RACH), for example.

Moreover, when N < 1, a CB preamble for requesting the Msg. 3 PUSCH repetition with P consecutive indices corresponding to a valid SS/PBCH block per RO may be configured (or reserved). Here, the Preamble indices of the CB preamble for requesting the Msg. 3 PUSCH Repetition may be started from R + Q. In other words, the Preamble indices of the CB preamble for requesting the Msg. 3 PUSCH Repetition are reserved immediately after the indices of the CB preamble for the 4-step and the CB preamble for the 2-step RACH (R + Q).

Meanwhile, when $N \geq 1$, for example, N SS/PBCH blocks are associated with one RO, and a CB preamble for the 4-step RACH with R consecutive indices corresponding to the SS/PBCH block index, n ($0 \leq n \leq$ N-1) per RO may be configured (or reserved). Here, of the CB preambles for the 4-step RACH, the Preamble indices corresponding to the n-th SS/PBCH block may be started from "$n \cdot N_{preamble}^{total}/N$." Where $N_{preamble}^{total}$ is the number of preambles included in an RO and may be an integral multiple of N.

Further, when $N \geq 1$, for example, a CB preamble for the 2-step RACH with Q consecutive indices corresponding to the SS/PBCH block index, n ($0 \leq n \leq$ N-1) per RO may be configured (or reserved). Here, of the CB preambles for the 2-step RACH, the Preamble indices corresponding to the n-th SS/PBCH block may be started from "$n \cdot N_{preamble}^{total}/N$ +R" (e.g., after CB preamble for 4-step RACH).

Furthermore, when $N \geq 1$, a CB preamble for requesting the Msg. 3 PUSCH repetition with P consecutive indices corresponding to the SS/PBCH block index, n ($0 \leq n \leq$ N-1) per RO may be configured (or reserved) for a valid SS/PBCH block. Here, of the CB preambles for requesting the Msg. 3 PUSCH repetition, the Preamble indices corresponding to the n-th SS/PBCH block may be started from "$n \cdot N_{preamble}^{total}/N$ +R+Q". In other words, the Preamble indices of the CB preamble for requesting the Msg. 3 PUSCH repetition are reserved immediately after the indices of the CB preamble for the 4-step and the CB preamble for the 2-step RACH.

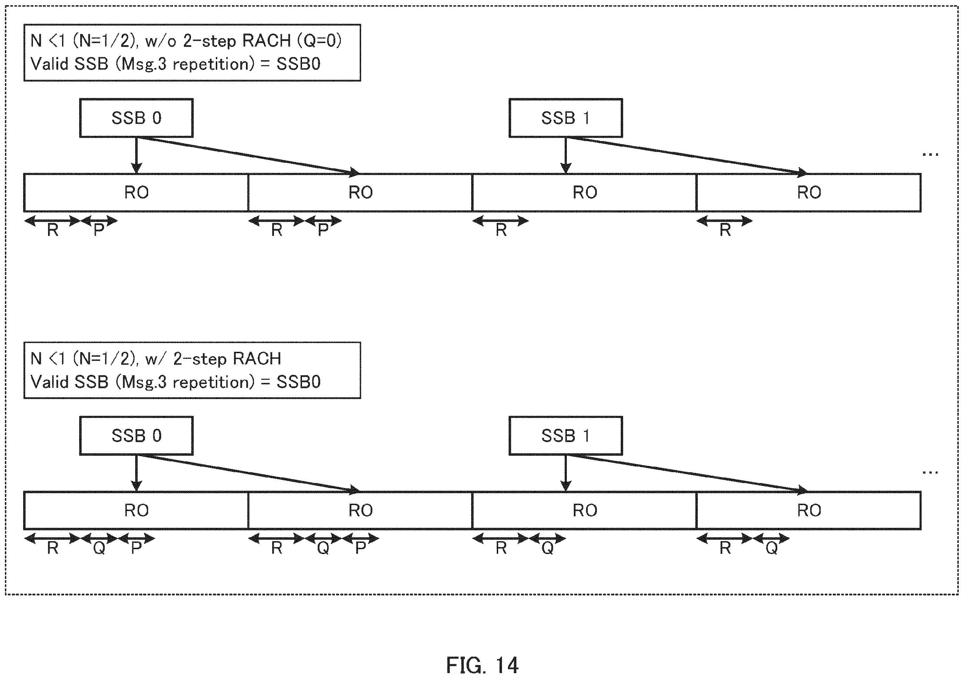

FIG. 14 illustrates an example of association of the valid SS/ PBCH blocks and the RACH preamble resources in Option 1.

The upper diagram of FIG. 14 is an example in which N < 1 (N = 1/2), Q = 0 (e.g., case where RO is not shared in between with 2-step RACH), and SS/PBCH block #0 (SSB 0) is configured to a valid SS/PBCH block index. Further, the lower diagram of FIG. 14 is an example in which N < 1 (N = 1/2), Q > 0 (e.g., case where RO is shared in between with 2-step RACH), and SS/PBCH block #0 (SSB 0) is configured to a valid SS/PBCH block index.

As illustrated in the upper and lower diagrams of FIG. 14, CB preambles for requesting the Msg. 3 PUSCH repetition are configured on ROs corresponding to the valid SS/PBCH block (e.g., SSB 0) and are not configured on ROs corresponding to the invalid SS/PBCH block (e.g., SSB 1). Further, P CB preambles for requesting the Msg. 3 PUSCH repetition are reserved immediately after R CB preambles for the 4-step RACH, in the upper diagram of FIG. 14, whereas, in the lower diagram of FIG. 14, the P CB preambles are reserved immediately after the R CB preambles for the 4-step RACH and Q CB preambles for the 2-step RACH.

For example, in order to support a plurality of different functions for the RedCap terminal, the SDT terminal, the RAN slicing, and the like, RACH preamble resources may be reserved, respectively, for the functions. In Option 1, in addition to reserving a RACH preamble resource different from the RACH preamble resource for the 4-step RACH (or 2-step RACH), it may be allowed to reserve, for terminal 200 requesting the Msg. 3 PUSCH repetition, the RACH preambles for the respective functions by immediate placement of Preamble indices. The order of reserving the Preamble indices by the immediate placement may be any order after the 4-step RACH and the 2-step RACH. The order may be defined by standards or may be configured for terminal 200 in advance.

For example, when the CB preamble for requesting the Msg. 3 PUSCH repetition is reserved following the 4-step RACH and the 2-step RACH, the Preamble indices may be started from R + Q (case where N < 1) or "$n \cdot N_{preamble}^{total}/N$ + R + Q" (case where $N \geq 1$), as mentioned above. Further, for example, when the CB preamble for the RedCap terminal is reserved following the CB preamble for requesting the Msg. 3 PUSCH repetition, the Preamble indices may be started from R + Q + P (case where N < 1) or "$n \cdot N_{preambie}^{total}/N$ + R + Q + P" (case where $N \geq 1$).

In addition, in configuration of a RACH preamble resource in an SS/PBCH block including no association with the CB preamble for requesting the Msg. 3 PUSCH repetition (e.g., invalid SS/PBCH block), the Preamble indices of the CB preambles corresponding to the respective functions may be reserved (e.g., started), with P = 0.

Further, for example, P' CB preambles for the RedCap terminal may be reserved following the 4-step RACH and the 2-step RACH, and then, the CB preamble for requesting the Msg. 3 PUSCH repetition may be reserved. In this case, the Preamble indices of the CB preamble for requesting the Msg. 3 PUSCH repetition may be started from R + Q + P' (case where N < 1) or "$n \cdot N_{preamble}^{total}/N$ + R + Q + P'''" (case where $N \geq 1$).

Besides, for example, when the PRACH mask is configured for the above-mentioned 2-step RACH, as for an RO for which no CB preamble for the 2-step RACH is reserved, the Preamble indices of each CB preamble may be reserved (e.g., started), with Q = 0.

<Option 2>

In Option 2, the RACH preamble for requesting the Msg. 3 PUSCH repetition may be reserved (i.e., started) from an index designated by an index offset (Offset).

The index offset may be indicated (or configured) from base station 100 to terminal 200 by, for example, a parameter (e.g., higher layer parameter), "ra-PreambleStartIndex-Msg3Repetition," or may be defined by standards. The name of the parameter is not limited to "ra-PreambleStartIndex-Msg3Repetition" and may be another name.

For example, when N < 1, one SS/PBCH block may be associated with 1/N consecutive ROs, and a CB preamble for the 4-step RACH with R consecutive indices corresponding to an SS/PBCH block per RO may be configured (or reserved). The preamble indices of the CB preamble for the 4-step RACH may be started from zero (e.g., corresponding to first index of RO), for example. Further, for example, a CB preamble for the 2-step RACH with Q consecutive indices corresponding to an SS/PBCH block per RO may be configured (or reserved). The preamble indices of the CB preamble for the 2-step RACH may be started from R (e.g., after CB preamble for 4-step RACH), for example.

Moreover, when N < 1, a CB preamble for requesting the Msg. 3 PUSCH repetition with P consecutive indices corresponding to a valid SS/PBCH block per RO may be configured (or reserved). Here, the Preamble indices of the CB preamble for requesting the Msg. 3 PUSCH Repetition may be started from a value designated by ra-Preamble-StartIndex-Msg3Repetition.

Meanwhile, when N ≥ 1, for example, N SS/PBCH blocks are associated with one RO, and a CB preamble for the 4-step RACH with R consecutive indices corresponding to the SS/PBCH block index, n ($0 \leq n \leq$ N-1) per RO may be configured (or reserved). Here, of the CB preambles for the 4-step RACH, the Preamble indices corresponding to the n-th SS/PBCH block may be started from "$n \cdot N_{preamble}^{total}/N$." Where $N_{preamble}^{total}$ is the number of preambles included in an RO and may be an integral multiple of N.

Further, when N ≥ 1, for example, a CB preamble for the 2-step RACH with Q consecutive indices corresponding to the SS/PBCH block index, n ($0 \leq n \leq$ N-1) per RO may be configured (or reserved). Here, of the CB preambles for the 2-step RACH, the Preamble indices corresponding to the n-th SS/PBCH block may be started from "$n \cdot N_{preamble}^{total}/N$ +R" (e.g., after CB preamble for 4-step RACH).

Furthermore, when N ≥ 1, a CB preamble for requesting the Msg. 3 PUSCH repetition with P consecutive indices corresponding to the SS/PBCH block index, n ($0 \leq n \leq$ N-1) per RO may be configured (or reserved) for a valid SS/PBCH block. Here, of the CB preambles for requesting the Msg. 3 PUSCH repetition, the Preamble indices corresponding to the n-th SS/PBCH block may be started from "$n \cdot N_{preamble}^{total}/N$ +O." Here, O is a value designated by ra-PreambleStartIndex-Msg3Repetition.

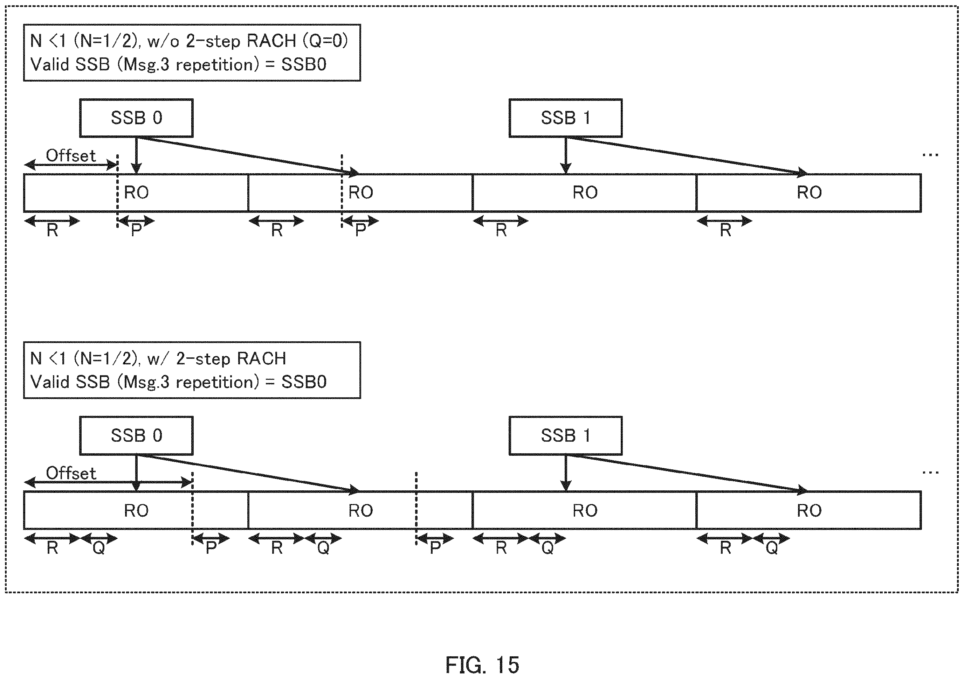

FIG. 15 illustrates an example of association of the valid SS/ PBCH blocks and the RACH preamble resources in Option 2.

The upper diagram of FIG. 15 is an example in which N < 1 (N = 1/2), Q = 0 (e.g., case where RO is not shared in between with 2-step RACH), and SS/PBCH block #0 (SSB 0) is configured to a valid SS/PBCH block index. Further, the lower diagram of FIG. 15 is an example in which N < 1 (N = 1/2), Q > 0 (e.g., case where RO is shared in between with 2-step RACH), and SS/PBCH block #0 (SSB 0) is configured to a valid SS/PBCH block index.

As illustrated in the upper and lower diagrams of FIG. 15, CB preambles for requesting the Msg. 3 PUSCH repetition are configured on ROs corresponding to the valid SS/PBCH block (e.g., SSB 0) and are not configured on ROs corresponding to the invalid SS/PBCH block (e.g., SSB 1). Further, P CB preambles for requesting the Msg. 3 PUSCH repetition are reserved from indices designated by the index offset (Offset).

For example, in order to support a plurality of different functions for the RedCap terminal, the SDT terminal, the RAN slicing, and the like, RACH preamble resources may be reserved, respectively, for the functions. In Option 2, in addition to reserving a RACH preamble resource different from the RACH preamble resource for the 4-step RACH (or 2-step RACH), it may be allowed to configure, for terminal 200 requesting the Msg. 3 PUSCH repetition, indices from which the RACH preambles for the respective functions are started, by an offset configured separately for each of the functions.

In other words, a RACH preamble for each of the functions can be configured regardless of the Preamble indices of the RACH preambles for the other functions. Therefore, for the RACH preambles for the respective functions, it is not necessary to determine the order for the reservation made by immediate placement the Preamble indices of the RACH preambles for the other functions.

The association examples of valid SS/PBCH blocks and RACH preamble resources for requesting the Msg. 3 PUSCH repetition have been each described, thus far.

[Exemplary Selection of Random Access Procedure Method]

Next, an exemplary selection of a Random Access Procedure method by terminal 200 will be described.

An operation relating to the selection of the Random Access Procedure method is, for example, an operation of terminal 200 for determining whether to perform RACH transmission using a CB preamble for the 4-step RACH to which no Repetition is applied, to perform RACH transmission using a CB preamble for the 2-step RACH transmission, or to perform RACH transmission using a CB preamble for requesting the Msg. 3 PUSCH repetition.

For example, when both the 2-step RACH and the 4-step RACH are operable in terminal 200, a threshold (e.g.,

msgA-RSRP-Threshold) to operate the 2-step RACH may be set for terminal 200 (see, e.g., NPL 8). Terminal 200 may be configured to perform the RACH transmission using the CB preamble for the 2-step RACH when a received quality (e.g., RSRP, RSRQ, or SINR) is equal to or greater than the threshold (condition A).

Further, for example, when the Msg. 3 PUSCH repetition is operable in terminal 200, a threshold (e.g., Msg3Repetition-RSRP-Threshold) to request the Msg. 3 PUSCH repetition may be set for terminal 200. Terminal 200 may be configured to perform the RACH transmission using the CB preamble for requesting the Msg. 3 PUSCH repetition when a received quality is equal to or less than the threshold (condition B).

Meanwhile, for example, when neither condition A nor condition B are satisfied, terminal 200 may be configured to perform the RACH transmission using the CB preamble for the 4-step RACH to which no Repetition is applied.

The thresholds used in condition A and condition B may be indicated from base station 100 to terminal 200 or may be defined by standards.

When the RACH transmission is performed using the CB preamble for the 4-step RACH to which no Repetition is applied, terminal 200 may, for example, measure a received quality (e.g., SS-RSRP) of each SS/PBCH block and, when there is one or a plurality of SS/PBCH blocks where SS-RSRPs are equal to or greater than the threshold, select one SS/PBCH block from among SS/PBCH blocks where SS-RSRPs are equal to or greater than a threshold (e.g., rsrp-ThresholdSSB (see NPL 8)), thus selecting a RACH preamble from a group of candidates for RACH preamble resources associated with the selected SS/PBCH block. On the other hand, when there is no SS/PBCH blocks where SS-RSRPs are equal to or greater than the threshold, terminal 200 may select any SS/PBCH block and then select a RACH preamble from a group of candidates for RACH preamble resources associated with the selected SS/PBCH block.

Meanwhile, when RACH transmission is performed using the CB preamble for the requesting the Msg. 3 PUSCH repetition, terminal 200 may, for example, measure a received quality (e.g., SS-RSRP) of each valid SS/PBCH block and, when there is one or a plurality of valid SS/PBCH blocks where SS-RSRPs are equal to or greater than the threshold, select one valid SS/PBCH block from among valid SS/PBCH blocks where SS-RSRPs are equal to or greater than a threshold (e.g., Msg3Repetition-RSRP-ThresholdSSB), thus selecting a RACH preamble from a group of candidates for RACH preamble resources associated with the selected valid SS/PBCH block. On the other hand, when there is no valid SS/PBCH blocks where SS-RSRPs are equal to or greater than the threshold, terminal 200 may select any valid SS/PBCH block and then select a RACH preamble from a group of candidates for RACH preamble resources associated with the selected valid SS/PBCH block.

The exemplary selection of the Random Access Procedure method by terminal 200 has been described, thus far.

As described above, according to the present embodiment, base station 100 and terminal 200 separately control, for each of a plurality of SS/PBCH blocks, configuration of a RACH preamble resource in an RO associated with each of the plurality of SS/PBCH blocks. For example, base station 100 and terminal 200 configure a RACH preamble resource in a valid SS/PBCH block and configure no RACH preamble resource in an invalid SS/PBCH block, of the plurality of SS/PBCH blocks.

Thus, for example, it is possible to configure each of the plurality of SS/PBCH blocks (e.g., SS/PBCH block indices) with the presence or absence of association with a RACH preamble resource. Therefore, for example, RACH preamble resources may be reserved for some SS/PBCH blocks that cover coverage areas requiring application of the Msg. 3 PUSCH repetition, whereas RACH preamble resources need not be reserved for the other SS/PBCH blocks.

This RACH preamble resource configuration allows terminal 200 to appropriately request the Msg. 3 PUSCH repetition to base station 100, with the RACH preambles, and to suppress the strain of RACH preamble resources. Therefore, according to the present embodiment, it is possible to improve the resource efficiency in a random access procedure.

(Variation of Embodiment 1)

As described above, in the 2-step RACH of Rel. 16, when one SS/PBCH block is associated with 1/N consecutive ROs (e.g., case where N < 1), it is possible to configure the "PRACH mask" which allows RACH transmission for the 2-step RACH in a portion (subset) of the ROs associated with the same SS/PBCH block. Configuring the PRACH mask achieves, for example, a configuration in which a portion (subset) of N ROs associated with the same SS/PBCH block is configured with the CB preamble for the 2-step RACH whereas the other ROs are not configured with the CB preamble for the 2-step RACH.

In the present variation, for example, for the RACH for requesting the Msg. 3 PUSCH repetition or in order to support a plurality of different functions for the RedCap terminal, the SDT terminal, the RAN slicing, and the like, when RACH preamble resources are reserved, respectively, for the functions, the "PRACH mask" which allows RACH transmission in a portion (subset) of the ROs associated with the same SS/PBCH block may be configured for each function. Further, for the RACH for requesting the Msg. 3 PUSCH repetition, the "PRACH mask" and "valid SS/PBCH block-index indication" may be used in combination.

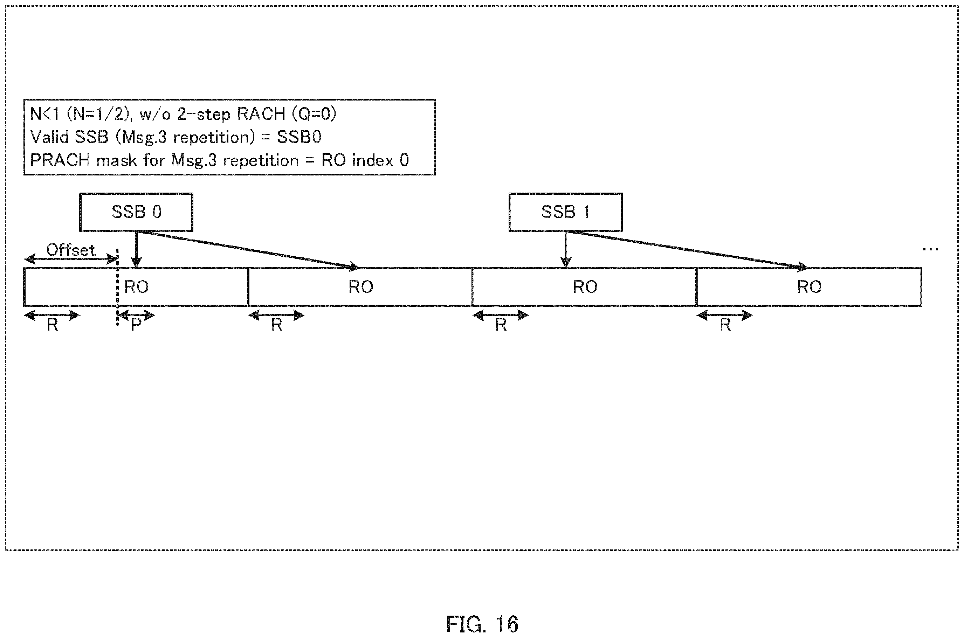

FIG. 16 illustrates an example of association of the valid SS/ PBCH blocks and the RACH preamble resources in the variation.

FIG. 16 illustrates an example in which N < 1 (N = 1/2), Q = 0 (e.g., case where RO is not shared in between with 2-step RACH), SS/PBCH block #0 (SSB 0) is configured to a valid SS/PBCH block index, and RO index 0 (corresponding to leftmost RO in FIG. 16) is configured to an Allowed RO by a PRACH mask index for RACH for requesting the Msg. 3 PUSCH repetition.

In FIG. 16, a CB preamble for requesting the Msg. 3 PUSCH repetition can be configured on an RO corresponding to a valid SS/PBCH block (e.g., SSB 0) and is not configured on an RO corresponding to an invalid SS/PBCH block (e.g., SSB 1). P CB preambles for requesting the Msg. 3 PUSCH repetition are configured on the RO of RO index 0 that has been configured to an Allowed RO. In other words, in FIG. 16, the CB preamble for requesting the Msg. 3 PUSCH repetition is configured on a portion (subset) that is of two ROs corresponding to SSB 0 and that is corresponding to RO index 0, whereas it is not configured on the other ROs.

According to the present variation, the strain of RACH resources can be further suppressed in a case where one SS/PBCH block is associated with 1/N consecutive ROs (e.g., case where N < 1).

(Embodiment 2)

Configurations of base station 100 and terminal 200 according to the present embodiment may be the same as the configurations in Embodiment 1.

In the present embodiment, it is assumed that the same system information (e.g., SIB) is transmitted from a plurality of SS/PBCH blocks, as in Rel. 15 and Rel. 16.

In the present embodiment, base station 100 and terminal 200 may, for example, configure, separately for each of a plurality of SS/PBCH blocks, a RACH resource (e.g., RACH preamble resource for requesting Msg. 3 PUSCH repetition) in an RO associated with each of the plurality of SS/PBCH blocks configured for terminal 200.

For example, base station 100 and terminal 200 may separately configure, for each of the plurality of SS/PBCH blocks, the number of CB preambles for requesting the Msg. 3 PUSCH repetition in an RO associated with each of the plurality of SS/PBCH blocks. By way of example, for the RACH preamble for requesting the Msg. 3 PUSCH repetition requesting, the number of CB preambles to be configured per SS/PBCH block per RO may be separately configured for each of the plurality of SS/PBCH blocks. For example, a separate number of CB preambles "$P_i$" may be configured for each of the plurality of SS/PBCH blocks. Here, $P_i$ is the number of CB preambles configured for an RO corresponding to the i-th (i = 0 to L-1) SS/PBCH block index. Further, L is the number of SS/PBCH blocks.

According to the present embodiment, it is possible to flexibly configure the number of CB preambles, $P_i$, to be reserved in an RO corresponding to each SS/PBCH block. For example, decreasing the number of RACH preambles for requesting the Msg. 3 PUSCH repetition leads to reduction in amount of RACH resources to be reserved for an SS/PBCH block to which the Msg. 3 PUSCH repetition need not be applied, thereby suppressing the strain of RACH resources.

Further, the flexible configuration of the number of RACH preambles for requesting the Msg. 3 PUSCH repetition may cause, for example, an increase in the number of terminal 200 requesting the Msg. 3 PUSCH repetition, the number of RACH preambles for requesting the Msg. 3 PUSCH repetition may be increased as needed. An increase in the number of RACH preambles improves the storage efficiency of terminal 200 requesting the Msg. 3 PUSCH repetition.

[Example of Association of SS/PBCH Blocks and RACH preamble resources]

In the following, a description will be given of an example of association of SS/PBCH blocks and RACH preamble resources for requesting the Msg. 3 PUSCH repetition.

When the Msg. 3 PUSCH repetition and the 4-step RACH (or 2-step RACH) share RACH configuration, a RACH preamble for the 4-step RACH, a RACH preamble for the 2-step RACH, and a RACH preamble for requesting the Msg. 3 PUSCH repetition may be given by different preamble resources in the same RO, for example.

By way of example, terminal 200 may be configured with the number of SS/PBCH blocks, "N," corresponding to one RACH Occasion (RO), the number of CB preambles, "R" per SS/PBCH block per RO for the 4-step RACH, the number of CB preambles, "Q" per SS/PBCH block per RO for the 2-step RACH, and the number of CB preambles, "$P_i$" per SS/PBCH block per RO for a RACH preamble for requesting the Msg. 3 PUSCH repetition. Here, $P_i$ is the number of CB preambles configured on an RO corresponding to the i-th (I = 0 to L-1) SS/PBCH block index, and L is the number of SS/PBCH blocks.

In the following, a description will be given of a configuration example of a RACH preamble resource corresponding to an SS/PBCH block and for requesting the Msg. 3 PUSCH repetition.

<Option 1>

In Option 1, a RACH preamble for requesting the Msg. 3 PUSCH repetition may be configured following a RACH preamble resource for the 4-step RACH (or 2-step RACH). For example, a RACH preamble index for requesting the Msg. 3 PUSCH repetition may be reserved (i.e., started) immediately after a RACH preamble index (e.g., earlier reserved index) for the 4-step RACH (or 2-step RACH).

For example, when N < 1, one SS/PBCH block may be associated with 1/N consecutive ROs, and a CB preamble for the 4-step RACH with R consecutive indices corresponding to an SS/PBCH block per RO may be configured (or reserved). The preamble indices of the CB preamble for the 4-step RACH may be started from zero (e.g., corresponding to first index of RO), for example. Further, for example, a CB preamble for the 2-step RACH with Q consecutive indices corresponding to an SS/PBCH block per RO may be configured (or reserved). The preamble indices of the CB preamble for the 2-step RACH may be started from R (e.g., after CB preamble for 4-step RACH), for example.

Moreover, when N < 1, a CB preamble for requesting the Msg. 3 PUSCH repetition with $P_i$ consecutive indices corresponding to an SS/PBCH block per RO may be configured (or reserved). Here, the Preamble indices of the CB preamble for requesting the Msg. 3 PUSCH Repetition may be started from R + Q. In other words, the Preamble indices of the CB preamble for requesting the Msg. 3 PUSCH Repetition are reserved immediately after the indices of the CB preamble for the 4-step and the CB preamble for the 2-step RACH (R +Q).

Meanwhile, when N $\geq$ 1, for example, N SS/PBCH blocks are associated with one RO, and a CB preamble for the 4-step RACH with R consecutive indices corresponding to the SS/PBCH block index, n (0 $\leq$ n $\leq$ N-1) per RO may be configured (or reserved). Here, of the CB preambles for the 4-step RACH, the Preamble indices corresponding to the n-th SS/PBCH block may be started from "$n \cdot N_{preamble}^{total}/N$." Where $N_{preamble}^{total}$ is the number of preambles included in an RO and may be an integral multiple of N.

Further, when N $\geq$ 1, for example, a CB preamble for the 2-step RACH with Q consecutive indices corresponding to the SS/PBCH block index, n (0 $\leq$ n $\leq$ N-1) per RO may be configured (or reserved). Here, of the CB preambles for the 2-step RACH, the Preamble indices corresponding to the n-th SS/PBCH block may be started from "$n \cdot N_{preamble}^{total}/N +R$" (e.g., after CB preamble for 4-step RACH).

Furthermore, when N $\geq$ 1, a CB preamble for requesting the Msg. 3 PUSCH repetition with $P_i$ consecutive indices corresponding to the SS/PBCH block index, n (0 $\leq$ n $\leq$ N-1) per RO may be configured (or reserved). Here, of the CB preambles for requesting the Msg. 3 PUSCH repetition, the Preamble indices corresponding to the n-th SS/PBCH block may be started from "$n \cdot N_{preamble}^{total}/N +R+Q$". In other words, the Preamble indices of the CB preamble for requesting the Msg. 3 PUSCH repetition are reserved immediately after the indices of the CB preamble for the 4-step and the CB preamble for the 2-step RACH.

For example, in order to support a plurality of different functions for the RedCap terminal, the SDT terminal, the RAN slicing, and the like, RACH preamble resources may be reserved, respectively, for the functions. In Option 1, in addition to reserving a RACH preamble resource different from the RACH preamble resource for the 4-step RACH (or 2-step RACH), it may be allowed to reserve, for terminal 200 requesting the Msg. 3 PUSCH repetition, the RACH preambles for the respective functions by immediate placement of Preamble indices. The order of reserving the Preamble indices by the immediate placement may be any order after the 4-step RACH and the 2-step RACH. The order may be defined by standards or may be configured for terminal 200 in advance.

For example, when the CB preamble for requesting the Msg. 3 PUSCH repetition is reserved following the 4-step RACH and the 2-step RACH, the Preamble indices may be started from R + Q (case where N < 1) or "$n \cdot N_{preamble}^{total}/N + R + Q$" (case where N $\geq$ 1), as mentioned above. Further, for example, when the CB preamble for the RedCap terminal is reserved following the CB preamble for requesting the Msg. 3 PUSCH repetition, the Preamble indices may be started from R + Q + $P_i$ (case where N < 1) or "$n \cdot N_{preamble}^{total}/N + R + Q + P_i$" (case where N $\geq$ 1).

Further, for example, P' CB preambles for the RedCap terminal may be reserved following the 4-step RACH and the 2-step RACH, and then, the CB preamble for requesting the Msg. 3 PUSCH repetition may be reserved. In this case, the Preamble indices of the CB preamble for requesting the Msg. 3 PUSCH repetition may be started from R + Q + P' (case where N < 1) or "$n \cdot N_{preamble}^{total}/N+ R + Q + P'''$" (case where N $\geq$ 1).

Besides, for example, when the PRACH mask is configured for the above-mentioned 2-step RACH, as for an RO for which no CB preamble for the 2-step RACH is reserved, the Preamble indices of each CB preamble may be reserved (e.g., started), with Q = 0.

Besides, for example, for terminal 200 requesting the Msg. 3 PUSCH repetition, when RACH preamble resources are reserved, respectively, for a plurality of different functions for the RedCap terminal, the SDT terminal, the RAN slicing, and the like in order to support the functions, in addition to reserving a RACH preamble resource different from the RACH preamble resource for the 4-step RACH and the 2-step RACH, a separate number of CB preambles for each SS/PBCH block may be configured for the respective functions.

Further, for example, for at least one of the 4-step RACH and the 2-step RACH, values of the number of CB preambles R and Q may be configured separately for each SS/PBCH block.

**<Option 2>**

In Option 2, the RACH preamble for requesting the Msg. 3 PUSCH repetition may be reserved (i.e., started) from an index designated by an index offset (Offset).

The index offset may be indicated (or configured) from base station 100 to terminal 200 by, for example, a parameter (e.g., higher layer parameter), "ra-PreambleStartIndex-Msg3Repetition," or may be defined by standards. The name of the parameter is not limited to "ra-PreambleStartIndex-Msg3Repetition" and may be another name.

For example, when N < 1, one SS/PBCH block may be associated with 1/N consecutive ROs, and a CB preamble for the 4-step RACH with R consecutive indices corresponding to an SS/PBCH block per RO may be configured (or reserved). The preamble indices of the CB preamble for the 4-step RACH may be started from zero (e.g., corresponding to first index of RO), for example. Further, for example, a CB preamble for the 2-step RACH with Q consecutive indices corresponding to an SS/PBCH block per RO may be configured (or reserved). The preamble indices of the CB preamble for the 2-step RACH may be started from R (e.g., after CB preamble for 4-step RACH), for example.

Moreover, when N < 1, a CB preamble for requesting the Msg. 3 PUSCH repetition with $P_i$ consecutive indices corresponding to an SS/PBCH block per RO may be configured (or reserved). Here, the Preamble indices of the CB preamble for requesting the Msg. 3 PUSCH Repetition may be started from a value designated by ra-PreambleStartIndex-Msg3Repetition.

Meanwhile, when N ≥ 1, for example, N SS/PBCH blocks are associated with one RO, and a CB preamble for the 4-step RACH with R consecutive indices corresponding to the SS/PBCH block index, n (0 ≤ n ≤ N-1) per RO may be configured (or reserved). Here, of the CB preambles for the 4-step RACH, the Preamble indices corresponding to the n-th SS/PBCH block may be started from "$n \cdot N_{preamble}^{total}/N$." Where $N_{preamble}^{total}$ is the number of preambles included in an RO and may be an integral multiple of N.

Further, when N ≥ 1, for example, a CB preamble for the 2-step RACH with Q consecutive indices corresponding to the SS/PBCH block index, n (0 ≤ n ≤ N-1) per RO may be configured (or reserved). Here, of the CB preambles for the 2-step RACH, the Preamble indices corresponding to the n-th SS/PBCH block may be started from "$n \cdot N_{preamble}^{total}/N +R$" (e.g., after CB preamble for 4-step RACH).

Furthermore, when N ≥ 1, a CB preamble for requesting the Msg. 3 PUSCH repetition with $P_i$ consecutive indices corresponding to the SS/PBCH block index, n (0 ≤ n ≤ N-1) per RO may be configured (or reserved). Here, of the CB preambles for requesting the Msg. 3 PUSCH repetition, the Preamble indices corresponding to the n-th SS/PBCH block may be started from "$n \cdot N_{preamble}^{total}/N +O$." Here, O is a value designated by ra-PreambleStartIndex-Msg3Repetition.

For example, in order to support a plurality of different functions for the RedCap terminal, the SDT terminal, the RAN slicing, and the like, RACH preamble resources may be reserved, respectively, for the functions. In Option 2, in addition to reserving a RACH preamble resource different from the RACH preamble resource for the 4-step RACH (or 2-step RACH), it may be allowed to configure, for terminal 200 requesting the Msg. 3 PUSCH repetition, indices from which the RACH preambles for the respective functions are started, by an offset configured separately for each of the functions.

In other words, a RACH preamble for each of the functions can be configured regardless of the Preamble indices of the RACH preambles for the other functions. Therefore, for the RACH preambles for the respective functions, it is not necessary to determine the order for the reservation made by immediate placement the Preamble indices of the RACH preambles for the other functions.

Besides, for example, for terminal 200 requesting the Msg. 3 PUSCH repetition, when RACH preamble resources are reserved, respectively, for a plurality of different functions for the RedCap terminal, the SDT terminal, the RAN slicing, and the like in order to support the functions, in addition to reserving a RACH preamble resource different from the RACH preamble resource for the 4-step RACH and the 2-step RACH, a separate number of CB preambles for each SS/PBCH block may be configured for the respective functions.

Further, for example, for at least one of the 4-step RACH and the 2-step RACH, values of the number of CB preambles R and Q may be configured separately for each SS/PBCH block.

Further, for example, a value of the index offset may be set separately for each of the SS/PBCH blocks.

The association examples of SS/PBCH blocks and RACH preamble resources for requesting the Msg. 3 PUSCH repetition have been each described, thus far.

[Exemplary Selection of Random Access Procedure Method]

Next, an exemplary selection of a Random Access Procedure method by terminal 200 will be described.

An operation relating to the selection of the Random Access Procedure method is, for example, an operation of terminal 200 for determining whether to perform RACH transmission using a CB preamble for the 4-step RACH to which no Repetition is applied, to perform RACH transmission using a CB preamble for the 2-step RACH transmission, or to perform RACH transmission using a CB preamble for requesting the Msg. 3 PUSCH repetition.

For example, when both the 2-step RACH and the 4-step RACH are operable in terminal 200, a threshold (e.g., msgA-RSRP-Threshold) to operate the 2-step RACH may be set for terminal 200 (see, e.g., NPL 8). Terminal 200 may be configured to perform the RACH transmission using the CB preamble for the 2-step RACH when a received quality (e.g., RSRP, RSRQ, or SINR) is equal to or greater than the threshold (condition A).

Further, for example, when the Msg. 3 PUSCH repetition is operable in terminal 200, a threshold (e.g., Msg3Repetition-RSRP-Threshold) to request the Msg. 3 PUSCH repetition may be set for terminal 200. Terminal 200 may be configured to perform the RACH transmission using the CB preamble for requesting the Msg. 3 PUSCH repetition when a received quality is equal to or less than the threshold (condition B).

Meanwhile, for example, when neither condition A nor condition B are satisfied, terminal 200 may be configured to perform the RACH transmission using the CB preamble for the 4-step RACH to which no Repetition is applied.

The thresholds used in condition A and condition B may be indicated from base station 100 to terminal 200 or may be defined by standards.

When the RACH transmission is performed using the CB preamble for the 4-step RACH to which no Repetition is applied, terminal 200 may, for example, measure a received quality (e.g., SS-RSRP) of each SS/PBCH block and, when there is one or a plurality of SS/PBCH blocks where SS-RSRPs are equal to or greater than the threshold, select one SS/PBCH block from among SS/PBCH blocks where SS-RSRPs are equal to or greater than a threshold (e.g., rsrp-ThresholdSSB (see NPL 8)), thus selecting a RACH preamble from a group of candidates for RACH preamble resources associated with the selected SS/PBCH block. On the other hand, when there is no SS/PBCH blocks where SS-RSRPs are equal to or greater than the threshold, terminal 200 may select any SS/PBCH block and then select a RACH preamble from a group of candidates for RACH preamble resources associated with the selected SS/PBCH block.

Meanwhile, when RACH transmission is performed using the CB preamble for the requesting the Msg. 3 PUSCH repetition, terminal 200 may, for example, measure a received quality (e.g., SS-RSRP) of each SS/PBCH block and select one SS/PBCH block from among SS/PBCH blocks where SS-RSRPs are equal to or greater than a threshold (e.g., Msg3Repetition-RSRP-ThresholdSSB) and $P_i > 0$ when there is one or a plurality of SS/PBCH blocks where SS-RSRPs are equal to or greater than the threshold and $P_i > 0$, thus selecting a RACH preamble from a group of candidates for RACH preamble resources associated with the selected SS/PBCH block.

On the other hand, when there is no SS/PBCH blocks where $P_i > 0$ in the SS/PBCH blocks where SS-RSRPs are equal to or greater than the threshold, terminal 200 may select any of the SS/PBCH blocks where SS-RSRPs are equal to or greater than the threshold. Alternatively, when there is no SS/PBCH block where $P_i > 0$, terminal 200 may select a CB preamble for the 4-step RACH from a group of candidates for RACH preamble resources associated with the SS/PBCH blocks where SS-RSRPs are equal to or greater than the threshold and may Fallback the selected one to the 4-step RACH operation to which no Repetition is applied.

Meanwhile, when there is no SS/PBCH blocks where SS-RSRPs are equal to or greater than the threshold, terminal 200 may select any of SS/PBCH blocks where $P_i > 0$ and may then select a RACH preamble from a group of candidates for RACH preamble resources associated with the selected SS/PBCH block.

The exemplary selection of the Random Access Procedure method by terminal 200 has been described, thus far.

As described above, according to the present embodiment, base station 100 and terminal 200 separately control, for each of a plurality of SS/PBCH blocks, configuration of a RACH preamble resource in an RO associated with each of the plurality of SS/PBCH blocks. For example, base station 100 and terminal 200 may separately configure a RACH preamble resource (the number of CB preambles) for requesting the Msg. 3 PUSCH repetition in each of the ROs corresponding to the plurality of SS/PBCH blocks.

In the manner described above, it is made possible to flexibly configure the RACH preamble resource in each of the plurality of SS/PBCH blocks (e.g., SS/PBCH block indices), for example. Therefore, for example, more RACH preamble resources may be reserved for some SS/PBCH blocks that cover coverage areas requiring application of the Msg. 3 PUSCH repetition, whereas less RACH preamble resources may be reserved for the other SS/PBCH blocks.

This RACH preamble resource configuration allows terminal 200 to appropriately request the Msg. 3 PUSCH repetition to base station 100, with the RACH preambles, and to suppress the strain of RACH preamble resources. Therefore, according to the present embodiment, it is possible to improve the resource efficiency in a random access procedure.

(Embodiment 3)

Configurations of base station 100 and terminal 200 according to the present embodiment may be the same as the configurations in Embodiment 1.

In the present embodiment, it is assumed that system information (e.g., SIB) that is separate for each SS/PBCH block (hereinafter may also be referred to as "separate SIB for each SS/PBCH block") is transmitted. For example, the separate SIB for each of a plurality of SS/PBCH blocks may be indicated from base station 100 to terminal 200. The separate SIB for each SS/PBCH block may include, for example, information on a RACH preamble resources corresponding to an SS/PBCH block corresponding to this SIB.

The separate SIB for each SS/PBCH block may include, for example, information on a valid SS/PBCH block. By way of example, the information on the valid SS/PBCH block may be information indicating whether an SS/PBCH block to which the SIB is transmitted is an SS/PBCH block (e.g., valid SS/PBCH) that includes association with a RACH resource for requesting the Msg. 3 PUSCH repetition. Transmitting the separate SIB for each SS/PBCH block makes it possible to indicate, with one bit, information on whether the SS/PBCH to which SIB has been transmitted is valid.

Moreover, the separate SIB for each SS/PBCH block may include, for example, information on a RACH resource for requesting the Msg. 3 PUSCH repetition. By way of example, the information on the RACH resource for requesting the Msg. 3 PUSCH repetition may be information on the number of CB preambles (e.g., $P_i$) for requesting the Msg. 3 PUSCH repetition to be configured (or reserved) for an RO corresponding to an SS/PBCH block to which the SIB is transmitted.

Further, for example, when RACH preamble resources are reserved, respectively, for a plurality of different functions for the RedCap terminal, the SDT terminal, the RAN slicing, and the like in order to support the functions, information on a RACH resource included in the separate SIB for each SS/PBCH block may include information on the number of CB preambles for each function to be configured (reserved) for an RO corresponding to an SS/PBCH block to which the SIB has been transmitted. Besides, the information on the RACH resource may include, for example, the number of CB preambles for at least one of the 4-step RACH and the 2-step RACH to be configured (reserved) for the RO corresponding to the SS/PBCH block to which the SIB has been transmitted.

Transmitting the separate SIB for each SS/PBCH block makes it possible to flexibly configure the number of CB preambles for an RO corresponding to an SS/PBCH to which SIB is transmitted, thus improving the utilization efficiency of RACH resources.

The separate SIB for each SS/PBCH block may include other information, without limitation to the above-mentioned information. Hereinafter, description will be given of examples of the information included in the separate SIB for each SS/PBCH block.

[Parameter for Determining Received Power Level and Received quality Level relating to Cell Selection]

In NR, when terminal 200 is in an IDLE or INAVTICE state, a process of determining a cell to which terminal 200 is connected is specified (see, e.g., NPL 7). This operation is referred to as "Cell selection" or "Cell reselection."

In an initial cell selection in terminal 200 under the IDLE state, terminal 200 searches (scans) all RF channels (frequencies) of the NR frequency band (NR band) in accordance with the radio frequency (RF) capability of terminal 200. For example, terminal 200 may search for a strongest cell at every frequency. Here, the strongest cell may be, for example, a cell with the largest received signal power (e.g., RSRP) or a cell with the highest received quality (e.g., RSRQ).

Further, for example, when terminal 200 has measurement control information received in the past or frequency information or a parameter obtained from a cell detected in the past, terminal 200 may perform the cell selection based on these pieces of information (Cell selection by leveraging stored information). In this case, terminal 200 need not search for the all NR bands.

When finding an appropriate cell, terminal 200 selects (Camps on) the relevant cell. Here, the appropriate cell may be, for example, a cell that satisfies a criterion for the cell selection and may be a cell which terminal 200 is allowed to access. As the criterion for the cell selection, for example, it is specified to satisfy the following Equation 1 (e.g., see NPL 7):

$$S_{rxlev} > 0 \text{ AND } S_{qual} > 0 \text{ ... (Equation 1)}.$$

Here, $S_{rxlev}$ and $S_{qual}$ indicate, respectively, the received power level and the received quality level relating to the cell selection and are given by the following Equations 2 and 3:

$$S_{rxlev} = Q_{rxlevmeas} - (Q_{rxlevmin} + Q_{rxlevminoffset}) - P_{compensation} - Qoffset_{temp} \text{ ... (Equation 2)};$$

and

$$S_{qual} = Q_{qualmeas} - (Q_{qualmin} + Q_{qualminoffset}) - Qoffset_{temp} \text{ ... (Equation 3)}.$$

In Equation 2, $Q_{rxlevmeas}$ indicates a received power (e.g., RSRP) measured by terminal 200, $Q_{rxlevmin}$ indicates

a minimum required received power, $Q_{rxlevminoffset}$ indicates an offset value relative to $Q_{rxlevmin}$, $P_{compensation}$ indicates a correction value relating to the uplink transmission power capability of terminal 200, and $Qoffset_{temp}$ indicates an offset value applied temporarily.

Further, in Equation 3, $Q_{qualmeas}$ indicates a received quality (e.g., RSRQ) measured by terminal 200, $Q_{qualmin}$ indicates a minimum required received quality, $Q_{qualminoffset}$ indicates an offset value relative to $Q_{qualmin}$, and $Qoffset_{temp}$ indicates an offset value applied temporarily.

For example, $Q_{rxlevminoffset}$ and $Q_{qualminoffset}$ may be applied to a measurement result of high-priority PLMN when terminal 200 selects Visitor Public Land Mobile Network (VPLMN).

Terminal 200 may, for example, perform a process of the cell reselection after selecting (Camping on) a cell by the cell selection.

The minimum required received power, the offset value, and the correction value, which are the parameters for the cell selection or reselection, may be transmitted to terminal 200 by, for example, broadcast information such as an SIB. For example, the minimum required received power, $Q_{rxlevmin}$, and the minimum required received quality, $Q_{qualmin}$, may be indicated to terminal 200 by parameters "q-RxLevMin" and "q-RxQualMin" that are transmitted by an SIB.

In the above-mentioned criteria for the cell selection, $S_{rxlev}$ and $S_{qual}$ determine cell-coverage as measured by the RSRP and the RSRQ.

In the present embodiment, for example, at least one of "q-RxLevMin" and "q-RxQualMin" corresponding to an SS/PBCH block to which an SIB is transmitted may be included in an SIB that is separate for each SS/PBCH block. This makes it possible to configure at least one of q-RxLevMin and q-RxQualMin separately for each SS/PBCH block, so that the separate coverage for each SS/PBCH block can be achieved.

In one example, in an SS/PBCH block supporting the Msg. 3 PUSCH repetition, q-RxLevMin and q-RxQualMin may be configured such that values of $Q_{rxlevmin}$ or $Q_{qualmin}$ are reduced. This configuration makes it easier to increase values of $S_{rxlev}$ and $S_{qual}$ and can enlarge an uplink coverage in a range where terminal 200 requiring coverage extension is connectable.

Further, for example, in a certain SS/PBCH block, q-RxLevMin and q-RxQualMin may be configured such that values of $Q_{rxlevmin}$ or $Q_{qualmin}$ are increased. This configuration makes it easier to decrease values of $S_{rxlev}$ and $S_{qual}$ and can reduce uplink coverage covered by this SS/PBCH block. This is effective in suppressing interference with neighboring cells, by intentionally making terminal 200 unconnected in a particular area, for example. For example, it is useful for operation of local 5G which is based on self-land use and for which other-land use is not allowed.

[Parameters for Transmission Power Control]

In the present embodiment, for example, parameters for transmission power control on RACH transmission in a RACH resource corresponding to an SS/PBCH block to which an SIB is transmitted and on Msg. 3 transmission after the RACH transmission may be included in a separate SIB for each SS/PBCH block.

Thus, the transmission power control can be achieved separately for each SS/PBCH block.

For example, in an SS/PBCH block covering an area where uplink interference suppression is expected, such a parameter that suppresses the transmission power may be configured. In addition, coverage reduction due to the transmission power suppression may be compensated by applying Repetition to a RACH procedure that uses a RACH resource corresponding to the SS/PBCH block covering the area where the uplink interference suppression is expected.

The examples of the information included in the separate SIB for each SS/PBCH block have been described, thus far.

As described above, according to the present embodiment, base station 100 and terminal 200 separately control, for each of a plurality of SS/PBCH blocks, configuration of a RACH preamble resource in an RO associated with each of the plurality of SS/PBCH blocks. For example, information on a RACH preamble resource (the number of CB preambles) for requesting the Msg. 3 PUSCH repetition in each of the ROs corresponding to the plurality of SS/PBCH blocks may be indicated to terminal 200 by a separate SIB for each SS/PBCH block.

In the manner described above, it is made possible to flexibly configure the RACH preamble resource in each of the plurality of SS/PBCH blocks (e.g., SS/PBCH block indices), for example. Therefore, for example, more RACH preamble resources may be reserved for some SS/PBCH blocks that cover coverage areas requiring application of the Msg. 3 PUSCH repetition, whereas less RACH preamble resources may be reserved for the other SS/PBCH blocks.

This RACH preamble resource configuration allows terminal 200 to appropriately request the Msg. 3 PUSCH repetition to base station 100, with the RACH preambles, and to suppress the strain of RACH preamble resources. Therefore, according to the present embodiment, it is possible to improve the resource efficiency in a random access procedure.

Note that, in the present embodiment, a case has been described where a separate SIB for each SS/PBCH block is transmitted, but the present disclosure is not limited to this case, and an separate SIB for each group of SS/PBCH blocks may be transmitted, for example.

Additionally, in the present embodiment, the information to be indicated to terminal 200 may be transmitted using both the SIB common to the plurality of SS/PBCH blocks and the separate SIB for each of the SS/PBCH blocks, for example.

Further, the information to be transmitted by the separate SIB for each of the SS/PBCH blocks is not limited to the above-mentioned information and may be other information.

The embodiments according to a non-limiting example of the present disclosure have been each described, thus far.

Embodiment 1 (and variation thereof) and Embodiment 2 described above may be applied in combination with each other.

Further, for example, whether to apply the embodiments, the variation, or the Options in the embodiments may be configured (or indicated) from base station 100 on (to) terminal 200. The indication from base station 100 to terminal 200 may use a signal, such as RRC, MIB, SIB, or DCI.

Further, the RACH resource configuration for the Msg. 3 PUSCH repetition has been described in the embodiments, but the target of the resource configuration is not limited to the Msg. 3 PUSCH repetition and may be RACH corresponding to any of the functions such as the RedCap terminal, the SDT terminal, and the RAN slicing.

Further, the order of CB preambles in a RACH occasion (RO) is not limited to the order of a CB preamble for the 4-step RACH, a CB preamble for the 2-step RACH, and a CB preamble for requesting the Msg. 3 PUSCH repetition and may be another order.

Moreover, the RACH occasion may represent a resource (transmission occasion or transmission timing) with which terminal 200 can transmit RACH and may be defined by at least one of time domain and frequency domain, for example.

Further, in the embodiments described above, association of SS/PBCH blocks and RACH preamble resources has been described, but a non-limiting example of the present disclosure is not limited to the association of the SS/PBCH blocks and the RACH preamble resources. For example, an SS/PBCH block may be another signal. In addition, a RACH preamble resource may be a resource for the other signal.

In addition, the embodiments, the variation, and the Options in the embodiments described above may be applied to downlink transmission or sidelink transmission, without limitation to uplink transmission such as transmission of a RACH preamble or Msg. 3 PUSCH. Similarly, the embodiments, the variation, and the Options in the embodiments described above may be applied to uplink transmission or sidelink transmission, without limitation to downlink transmission such as transmission of an SS/PBCH block.

Further, the parameter values applied in the descriptions of the above embodiments, such as the number of SS/PBCH blocks, N per RO, the number of SS/PBCH blocks, L, and the SS/PBCH block group, L', are merely examples and may be other values.

(Complement)

Information indicating whether terminal 200 supports the functions, operations, or processes that have been described in the above-mentioned embodiments, variations, and complements may be transmitted (or indicated) from terminal 200 to base station 100, as capability information or a capability parameter for terminal 200, for example.

The capacity information may include information elements (IEs) that individually indicate whether terminal 200 supports at least one of the functions, operations, or processes that have been described in the above-mentioned embodiments, variations, and complements. Alternatively, the capability information may include information elements that indicate whether terminal 200 supports a combination of any two or more of the functions, operations, or processes that have been described in the above-mentioned embodiments, variations, and complements.

Base station 100 may determine (or decide or assume), for example, based on the capability information received from terminal 200, the functions, operations, or processes that are supported (or not supported) by terminal 200, which is a transmission source of the capability information. Base station 100 may execute operations, processes, or control in accordance with a determination result based on the capability information. By way of example, base station 100 may control the random access procedure, based on the capability information received from terminal 200.

Note that in a case where terminal 200 does not entirely support the functions, operations, or processes described in the above-mentioned embodiments, variations, and complements, such an unsupported part of the functions, operations, or processes may be interpreted as a limitation in terminal 200. For example, information or a request relating to such limitation may be indicated to base station 100.

The information on the capability or the limitation of terminal 200 may be defined by standards or may be implicitly indicated to base station 100 in association with information known in base station 100 or information to be transmitted to base station 100, for example.

The embodiments, the variations, and the complements according to a non-limiting and exemplary embodiment of the present disclosure have been each described, thus far.

Incidentally, in the present disclosure, Repetition may also be referred to as, for example, slot aggregation, slot bundling, TTI aggregation, or TTI bundling.

The present disclosure may be applied to, for example, communication between terminals, such as a sidelink communication.

Further, in the present disclosure, a downlink control channel, a downlink data channel, an uplink control channel, and an uplink data channel are not limited to PDCCH, PDSCH, PUCCH, and PUSCH, respectively, and may be control channels having other names.

Further, in the present disclosure, the RRC signaling is assumed for the higher layer signaling, but the signaling may be replaced with Medium Access Control(MAC) signaling and indication by a DCI that is physical layer signaling.

(Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

(Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, the base station may be replaced with a terminal. The base station may be a relay apparatus that relays communication between a higher node and a terminal. The base station may be a roadside unit as well.

(Uplink/Downlink/Sidelink)

The present disclosure may be applied to any of uplink, downlink and sidelink. The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

(Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

(Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

(Time Intervals)

In the present disclosure, time resource units are not limited to one or a combination of slots and symbols, and may be time resource units, such as frames, superframes, subframes, slots, time slots, subslots, minislots, or time resource units, such as symbols, Orthogonal Frequency Division Multiplexing (OFDM) symbols, Single Carrier-Frequency Division Multiple Access (SC-FDMA) symbols, or other time resource units. The number of symbols included in one slot is not limited to any number of symbols exemplified in the embodiment(s) described above, and may be other numbers of symbols.

(Frequency Bands)

The present disclosure may be applied to any of a licensed band and an unlicensed band.

(Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.
In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

(Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

<5G NR System Architecture and Protocol Stack>

3GPP has been working on the next release for the 5th generation cellular technology (simply called "5G"), including the development of a new radio access technology (NR) operating in frequencies ranging up to 100 GHz. The first version of the 5G standard was completed at the end of 2017, which allows proceeding to 5G NR standard-compliant trials and commercial deployments of terminals (e.g., smartphones).

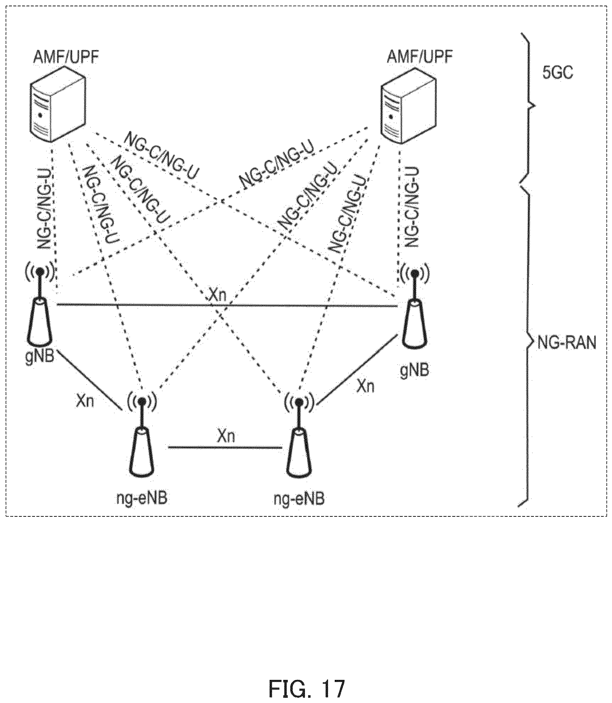

For example, the overall system architecture assumes an NG-RAN (Next Generation-Radio Access Network) that includes gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g., a particular core entity performing the AMF) by means of the NG-C interface and to the UPF (User Plane Function) (e.g., a particular core entity performing the UPF) by means of the NG-U interface. The NG-RAN architecture is illustrated in FIG. 17 (see e.g., 3GPP TS 38.300 v15.6.0, section 4).

The user plane protocol stack for NR (see e.g., 3GPP TS 38.300, section 4.4.1) includes the PDCP (Packet Data Convergence Protocol, see clause 6.4 of TS 38.300), RLC (Radio Link Control, see clause 6.3 of TS 38.300) and MAC (Medium Access Control, see clause 6.2 of TS 38.300) sublayers, which are terminated in the gNB on the network side. Additionally, a new Access Stratum (AS) sublayer (SDAP, Service Data Adaptation Protocol) is introduced above the PDCP (see e.g., clause 6.5 of 3GPP TS 38.300). A control plane protocol stack is also defined for NR (see for instance TS 38.300, section 4.4.2). An overview of the Layer 2 functions is given in clause 6 of TS 38.300. The functions of the PDCP, RLC, and MAC sublayers are listed respectively in clauses 6.4, 6.3, and 6.2 of TS 38.300. The functions of the RRC layer are listed in clause 7 of TS 38.300.

For instance, the Medium Access Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. The physical layer also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. Examples of the physical channel include a Physical Random Access Channel (PRACH), a Physical Uplink Shared Channel (PUSCH), and a Physical Uplink Control Channel (PUCCH) as uplink physical channels, and a Physical Downlink Shared Channel (PDSCH), a Physical Downlink Control Channel (PDCCH), and a Physical Broadcast Channel (PBCH) as downlink physical channels.

Use cases/deployment scenarios for NR could include enhanced mobile broadband (eMBB), ultra-reliable low-latency communications (URLLC), and massive machine type communication (mMTC), which have diverse requirements in terms of data rates, latency, and coverage. For example, eMBB is expected to support peak data rates (20 Gbps for downlink and 10 Gbps for uplink) and user-experienced data rates on the order of three times what is offered by IMT-Advanced. On the other hand, in case of URLLC, the tighter requirements are put on ultra-low latency (0.5 ms for UL and DL each for user plane latency) and high reliability (1-10-5 within 1 ms). Finally, mMTC may preferably require high connection density (1,000,000 devices/km$^2$ in an urban environment), large coverage in harsh environments, and extremely long-life battery for low cost devices (15 years).

Therefore, the OFDM numerology (e.g., subcarrier spacing, OFDM symbol duration, cyclic prefix (CP) duration, and number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacings of 15 kHz, 30 kHz, and 60 kHz... are being considered at the moment. The symbol duration Tu and the subcarrier spacing Δf are directly related through the formula Δf = 1/Tu. In a similar manner as in LTE systems, the term "resource element" can be used to denote a minimum resource unit being composed of one subcarrier for the length of one OFDM/SC-FDMA symbol.

In the new radio system 5G-NR for each numerology and each carrier, resource grids of subcarriers and OFDM symbols are defined respectively for uplink and downlink. Each element in the resource grids is called a resource element and is identified based on the frequency index in the frequency domain and the symbol position in the time domain (see 3GPP TS 38.211 v15.6.0).

<Functional Split between NG-RAN and 5GC in 5G NR>

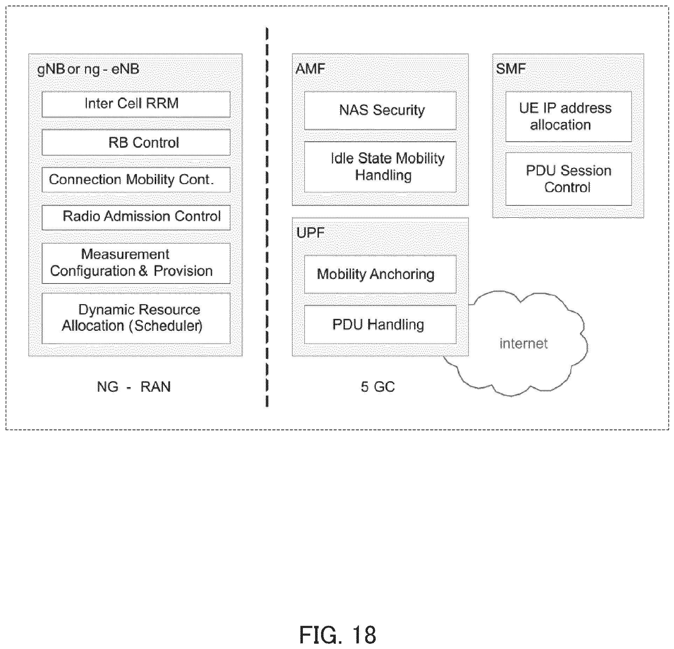

FIG. 18 illustrates the functional split between the NG-RAN and the 5GC. A logical node of the NG-RAN is gNB or ng-eNB. The 5GC includes logical nodes AMF, UPF, and SMF.

For example, gNB and ng-eNB hosts the following main functions:

- Radio Resource Management functions such as Radio Bearer Control, Radio Admission Control, Connection Mobility Control, and dynamic allocation (scheduling) of both uplink and downlink resources to a UE;
- IP header compression, encryption, and integrity protection of data;
- Selection of an AMF during UE attachment in such a case when no routing to an AMF can be determined from the information provided by the UE;
- Routing user plane data towards the UPF;
- Routing control plane information towards the AMF;
- Connection setup and release;
- Scheduling and transmission of paging messages;
- Scheduling and transmission of system broadcast information (originated from the AMF or an operation management maintenance function (OAM: Operation, Admission, Maintenance));
- Measurement and measurement reporting configuration for mobility and scheduling;
- Transport level packet marking in the uplink;
- Session management;
- Support of network slicing;
- QoS flow management and mapping to data radio bearers;
- Support of UEs in the RRC_INACTIVE state;
- Distribution function for NAS messages;
- Radio access network sharing;
- Dual connectivity; and
- Tight interworking between NR and E-UTRA.

The Access and Mobility Management Function (AMF) hosts the following main functions:

- Function of Non-Access Stratum (NAS) signaling termination;
- NAS signaling security;

- Access Stratum (AS) security control;
- Inter-Core Network (CN) node signaling for mobility between 3GPP access networks;
- Idle mode UE reachability (including control and execution of paging retransmission);
- Registration area management;
- Support of intra-system and inter-system mobility;
- Access authentication;
- Access authorization including check of roaming rights;
- Mobility management control (subscription and policies);
- Support of network slicing; and
- Session Management Function (SMF) selection.

In addition, the User Plane Function (UPF) hosts the following main functions:

- Anchor Point for intra-/inter-RAT mobility (when applicable);
- External Protocol Data Unit (PDU) session point for interconnection to a data network;
- Packet routing and forwarding;
- Packet inspection and a user plane part of Policy rule enforcement;
- Traffic usage reporting;
- Uplink classifier to support routing traffic flows to a data network;
- Branching point to support multi-homed PDU session;
- QoS handling for user plane (e.g., packet filtering, gating, UL/DL rate enforcement);
- Uplink traffic verification (SDF to QoS flow mapping); and
- Function of downlink packet buffering and downlink data notification triggering.

Finally, the Session Management Function (SMF) hosts the following main functions:

- Session management;
- UE IP address allocation and management;
- Selection and control of UPF;
- Configuration function for traffic steering at the User Plane Function (UPF) to route traffic to a proper destination;
- Control part of policy enforcement and QoS; and
- Downlink data notification.

<RRC Connection Setup and Reconfiguration Procedure>

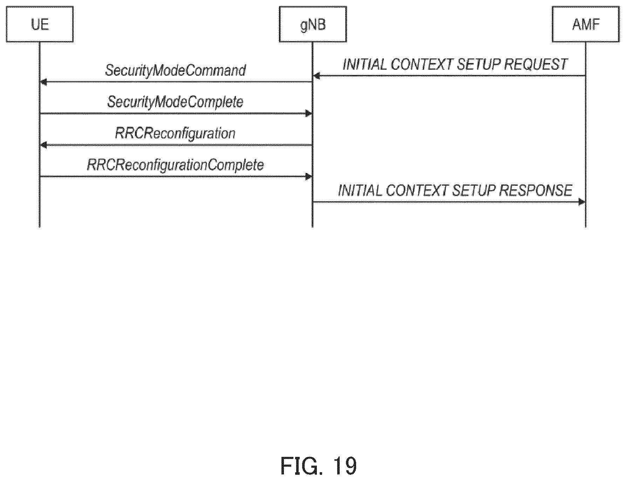

FIG. 19 illustrates some interactions between a UE, gNB, and AMF (a 5GC Entity) performed in the context of a transition of the UE from RRC_IDLE to RRC_CONNECTED for the NAS part (see TS 38 300 v15.6.0).
The RRC is higher layer signaling (protocol) used to configure the UE and gNB. With this transition, the AMF prepares UE context data (which includes, for example, a PDU session context, security key, UE Radio Capability, UE Security Capabilities, and the like) and sends it to the gNB with an INITIAL CONTEXT SETUP REQUEST. Then, the gNB activates the AS security with the UE. This activation is performed by the gNB transmitting to the UE a Security-ModeCommand message and by the UE responding to the gNB with the SecurityModeComplete message. Afterwards, the gNB performs the reconfiguration to setup the Signaling Radio Bearer 2 (SRB2) and Data Radio Bearer(s) (DRB(s)) by means of transmitting to the UE the RRCReconfiguration message and, in response, receiving by the gNB the RRCReconfigurationComplete from the UE. For a signaling-only connection, the steps relating to the RRCReconfiguration are skipped since SRB2 and DRBs are not set up. Finally, the gNB indicates the AMF that the setup procedure is completed with INITIAL CONTEXT SETUP RESPONSE.
Thus, the present disclosure provides a 5th Generation Core (5GC) entity (e.g., AMF, SMF, or the like) including control circuitry, which, in operation, establishes a Next Generation (NG) connection with a gNodeB, and a transmitter, which in operation, transmits an initial context setup message to the gNodeB via the NG connection such that a signaling radio bearer between the gNodeB and a User Equipment (UE) is set up. Specifically, the gNodeB transmits Radio Resource Control (RRC) signaling including a resource allocation configuration Information Element (IE) to the UE via the signaling radio bearer. Then, the UE performs an uplink transmission or a downlink reception based on the resource allocation configuration.

<Usage Scenarios of IMT for 2020 and beyond>

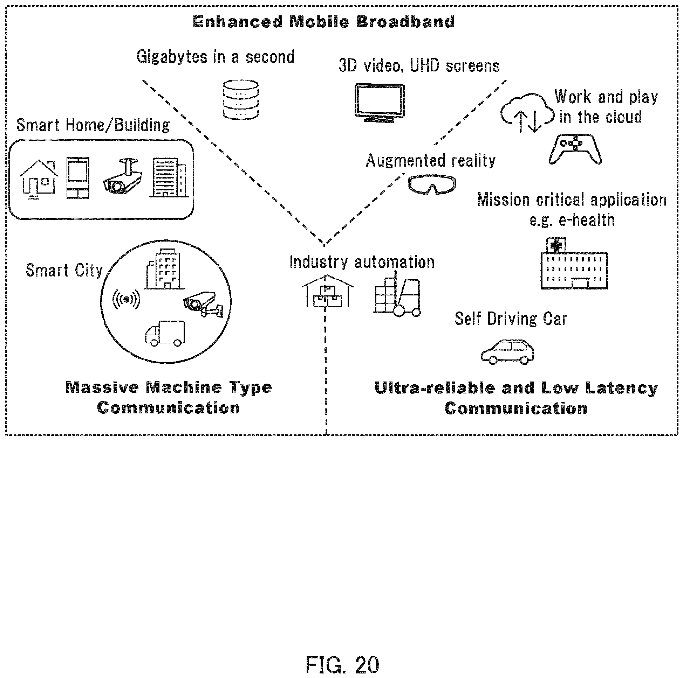

FIG. 20 illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications (mMTC). FIG. 20 illustrates some examples of envisioned usage scenarios for IMT for 2020 and beyond (see e.g., ITU-R M.2083 FIG. 2).

The URLLC use case has stringent requirements for capabilities such as throughput, latency and availability. The URLLC use case has been envisioned as one of the enablers for future vertical applications such as wireless control of industrial manufacturing or production processes, remote medical surgery, distribution automation in a smart grid, transportation safety. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a block error rate (BLER) of 1E-5 for a packet size of 32 bytes with a user plane latency of 1 ms.

From the physical layer perspective, reliability can be improved in a number of possible ways. The current scope for improving the reliability involves defining separate CQI tables for URLLC, more compact DCI formats, repetition of PDCCH, or the like. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency/higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, for example, for URLLC and mMTC, is high reliability or ultra-reliability. Several mechanisms can improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability improvement in general, regardless of particular communication scenarios.

For NR URLLC, further use cases with tighter requirements have been envisioned such as factory automation, transport industry and electrical power distribution. The tighter requirements are higher reliability (up to 10-6 level), higher availability, packet sizes of up to 256 bytes, time synchronization up to the extent of a few μs (where the value can be one or a few μs depending on frequency range and short latency on the order of 0.5 to 1 ms (in particular a target user plane latency of 0.5 ms), depending on the use cases).

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements are possible. The term "mini-slot" refers to a Transmission Time Interval (TTI) including a smaller number of symbols than a slot (a slot comprising fourteen symbols).

<QoS Control>

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU sessions. For each UE, the NG-RAN establishes at least one Data Radio Bearer (DRB) together with the PDU session, e.g., as illustrated above with reference to FIG. 19. Further, additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

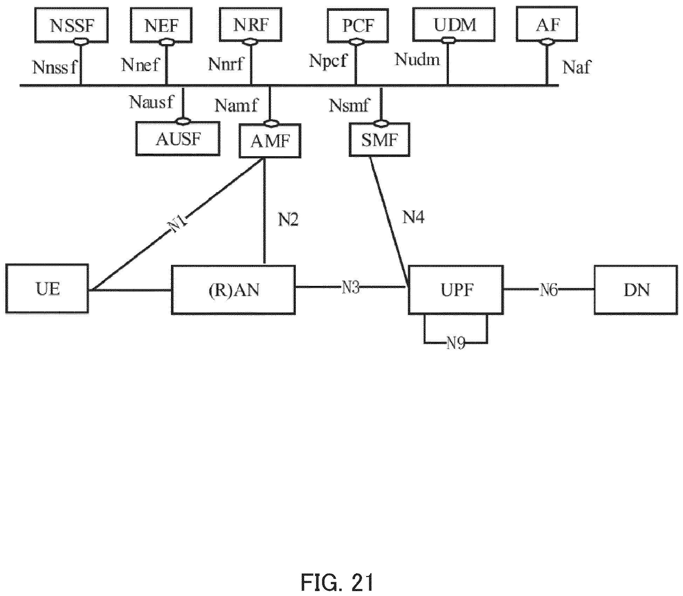

FIG. 21 illustrates a 5G NR non-roaming reference architecture (see TS 23.501 v16.1.0, section 4.23). An Application Function (AF) ( e.g., an external application server hosting 5G services, exemplarily described in FIG. 20) interacts with the 3GPP Core Network in order to provide services, for example to support application influencing on traffic routing, accessing Network Exposure Function (NEF) or interacting with the policy framework for policy control (e.g., QoS control) (see Policy Control Function, PCF). Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

FIG. 21 illustrates further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN, e.g., operator services, Internet access, or third party services). All of or a part of the core network functions and the application services may be deployed and running on cloud computing environments.

In the present disclosure, thus, an application server (e.g., AF of the 5G architecture), is provided that includes: a transmitter, which in operation, transmits a request containing a QoS requirement for at least one of URLLC, eMMB and mMTC services to at least one of functions (such as NEF, AMF, SMF, PCF, and UPF) of the 5GC to establish a PDU session including a radio bearer between a gNodeB and a UE in accordance with the QoS requirement; and control circuitry, which, in operation, performs the services using the established PDU session.

In the description of the present disclosure, the term, such as "part" or "portion" or the term ending with a suffix, such as "-er" "-or" or "-ar" may be interchangeably replaced with another term, such as "circuit (circuitry)," "device," "unit," or "module."

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as, e.g., a base station, an access point, and any other apparatus, device or system that communicates with or controls apparatuses such as those in the above non-limiting examples.

A terminal according to an exemplary embodiment of the present disclosure includes: control circuitry, which, in operation, controls, separately for each of a plurality of synchronization signal blocks, configuration of a resource in a transmission occasion associated with each of the plurality of synchronization signal blocks; and transmission circuitry, which, in operation, transmits a signal using the resource.

In an exemplary embodiment of the present disclosure, the control circuitry configures a resource in the transmission occasion corresponding to a first synchronization signal block among the plurality of synchronization signal blocks, and configures no resource in the transmission occasion corresponding to a second synchronization signal block different from the first synchronization signal block among the plurality of synchronization signal blocks.

In an exemplary embodiment of the present disclosure, reception circuitry, which, in operation, receives information on association of the first synchronization signal block and the resource is further included.

In an exemplary embodiment of the present disclosure, the information includes bitmap-format information indicating whether each of the plurality of synchronization signal blocks is the first synchronization signal block.

In an exemplary embodiment of the present disclosure, the information includes bitmap-format information indicating whether each of a plurality of groups obtained by grouping the plurality of synchronization signal blocks includes the first synchronization signal block.

In an exemplary embodiment of the present disclosure, the information includes information for identifying any one of a plurality of candidates for a combination of a plurality of the first synchronization signal blocks in the plurality of synchronization signal blocks.

In an exemplary embodiment of the present disclosure, the control circuitry configures, separately for the plurality of synchronization signal blocks, the number of preambles in the transmission occasion corresponding to each of the plurality of synchronization signal blocks.

In an exemplary embodiment of the present disclosure, reception circuitry, which, in operation, receives system information that is separate for each of the plurality of synchronization signal blocks is further included, in which the system information includes information on the resource corresponding to the synchronization signal block corresponding to this system information.

In an exemplary embodiment of the present disclosure, the resource is a resource for requesting repetition transmission of an uplink signal.

A base station according to an exemplary embodiment of the present disclosure includes: control circuitry, which, in operation, controls, separately for each of a plurality of synchronization signal blocks, configuration of a resource associated with each of the plurality of synchronization signal blocks; and reception circuitry, which, in operation, receives a signal using the resource.

A communication method according to an exemplary embodiment of the present disclosure includes: controlling, by a terminal, separately for each of a plurality of synchronization signal blocks, configuration of a resource associated with each of the plurality of synchronization signal blocks; and transmitting, by the terminal, a signal using the resource.

A communication method according to an exemplary embodiment of the present disclosure includes: controlling, by a base station, separately for each of a plurality of synchronization signal blocks, configuration of a resource associated with each of the plurality of synchronization signal blocks; and receiving, by the base station, a signal using the resource.

The disclosure of Japanese Patent Application No. 2021-159516, filed on September 29, 2021, including the specification, drawings and abstract, is incorporated herein by reference in its entirety.

Industrial Applicability

An exemplary embodiment of the present disclosure is useful for radio communication systems.

Reference Signs List

100 Base station
101, 206 Controller
102, 207 Signal generator
103, 208 Transmitter
104, 201 Receiver
105, 202 Extractor
106, 203 Demodulator

107, 204 Decoder
205 Measurer
200 Terminal

**Claims**

1. A terminal, comprising:

    control circuitry, which, in operation, controls, separately for each of a plurality of synchronization signal blocks, configuration of a resource in a transmission occasion associated with each of the plurality of synchronization signal blocks; and
    transmission circuitry, which, in operation, transmits a signal using the resource.

2. The terminal according to claim 1, wherein the control circuitry configures a resource in the transmission occasion corresponding to a first synchronization signal block among the plurality of synchronization signal blocks, and configures no resource in the transmission occasion corresponding to a second synchronization signal block different from the first synchronization signal block among the plurality of synchronization signal blocks.

3. The terminal according to claim 2, further comprising reception circuitry, which, in operation, receives information on association of the first synchronization signal block and the resource.

4. The terminal according to claim 3, wherein the information includes bitmap-format information indicating whether each of the plurality of synchronization signal blocks is the first synchronization signal block.

5. The terminal according to claim 3, wherein the information includes bitmap-format information indicating whether each of a plurality of groups obtained by grouping the plurality of synchronization signal blocks includes the first synchronization signal block.

6. The terminal according to claim 3, wherein the information includes information for identifying any one of a plurality of candidates for a combination of a plurality of the first synchronization signal blocks in the plurality of synchronization signal blocks.

7. The terminal according to claim 1, wherein the control circuitry configures, separately for the plurality of synchronization signal blocks, the number of preambles in the transmission occasion corresponding to each of the plurality of synchronization signal blocks.

8. The terminal according to claim 1, further comprising reception circuitry, which, in operation, receives system information that is separate for each of the plurality of synchronization signal blocks, wherein
    the system information includes information on the resource corresponding to the synchronization signal block corresponding to this system information.

9. The terminal according to claim 1, wherein the resource is a resource for requesting repetition transmission of an uplink signal.

10. A base station, comprising:

    control circuitry, which, in operation, controls, separately for each of a plurality of synchronization signal blocks, configuration of a resource associated with each of the plurality of synchronization signal blocks; and
    reception circuitry, which, in operation, receives a signal using the resource.

11. A communication method, comprising:

    controlling, by a terminal, separately for each of a plurality of synchronization signal blocks, configuration of a resource associated with each of the plurality of synchronization signal blocks; and
    transmitting, by the terminal, a signal using the resource.

12. A communication method, comprising:

controlling, by a base station, separately for each of a plurality of synchronization signal blocks, configuration of a resource associated with each of the plurality of synchronization signal blocks; and
receiving, by the base station, a signal using the resource.

N < 1 (N=1/2)

| SSB 0 | | SSB 1 |
|---|---|---|

| RO | RO | RO | RO |
|---|---|---|---|

R    R    R    R

...

N ≧ 1 (N=2)

| SSB 0 | SSB 1 | SSB 2 | SSB 3 |
|---|---|---|---|

| RO | RO |
|---|---|

R    R    R    R

$$N_{preamble}^{total}/N$$

...

FIG. 1

N < 1 (N=1/2)

| SSB 0 | | SSB 1 | |

| RO | RO | RO | RO |

R Q  R Q  R Q  R Q

...

N ≧ 1 (N=2)

| SSB 0 | SSB 1 | SSB 2 | SSB 3 |

| RO | RO |

R Q  R Q  R Q  R Q

...

$$N_{preamble}^{total}/N$$

FIG. 2

| PRACH mask index | Allowed RO(s) of SSB |
|---|---|
| 0 | All |
| 1 | RO index 1 |
| 2 | RO index 2 |
| 3 | RO index 3 |
| 4 | RO index 4 |
| 5 | RO index 5 |
| 6 | RO index 6 |
| 7 | RO index 7 |
| 8 | RO index 8 |
| 9 | Every even RO |
| 10 | Every odd RO |
| 11 - 15 | Reserved |

FIG. 3

EP 4 412 357 A1

FIG. 4

FIG. 5

<u>100</u>

```
┌──────────────┐          ┌──────────────┐
│  CONTROLLER  ├────────▶ │   RECEIVER   │
└──────────────┘          └──────────────┘
```

FIG. 6

<u>200</u>

```
┌──────────────┐          ┌──────────────┐
│  CONTROLLER  ├────────▶ │ TRANSMITTER  │
└──────────────┘          └──────────────┘
```

FIG. 7

FIG. 8

FIG. 9

S101 — Receive information on association of SS/PBCH blocks and RACH resources

S102 — Select Random Access Procedure

S103 — Select SS/PBCH

S104 — Transmit RACH using RACH preamble associated with selected SS/PBCH

Start → S101 → S102 → S103 → S104 → End

FIG. 10

N < 1 (N=1/2), Valid SSB index pattern = SSB0

| SSB 0 | | SSB 1 | |
|---|---|---|---|

| RO | RO | RO | RO |
|---|---|---|---|

R  P   R  P   R   R

...

N ≧ 1 (N=2), Valid SSB index pattern = SSB1, SSB2

| SSB 0 | SSB 1 | SSB 2 | SSB 3 |
|---|---|---|---|

| RO | RO |
|---|---|

R   R  P   R  P   R

$$N_{preamble}^{total}/N$$

...

FIG. 11

| Number of SSBs | Number of SSBs within a group | |
| --- | --- | --- |
| | Example 1 | Example 2 |
| 4 | 1 | 1 |
| 8 | 2 | 2 |
| 64 | 16 | 4 |

FIG. 12

| Valid SSB pattern index | Valid SSB | | |
| --- | --- | --- | --- |
| | L=4 | L=8 | L=64 |
| 0 | All | All | All |
| 1 | SSB index 0 | SSB index 0 | SSB index 0, 1, 2, 3 |
| 2 | SSB index 1 | SSB index 1 | SSB index 4, 5, 6, 7 |
| 3 | SSB index 2 | SSB index 2, 3 | SSB index 8, 9 |
| 4 | SSB index 3 | SSB index 4, 5 | SSB index 10, 11 |
| … | … | … | … |

FIG. 13

41

EP 4 412 357 A1

FIG. 14

N <1 (N=1/2), w/o 2-step RACH (Q=0)
Valid SSB (Msg.3 repetition) = SSB0

N <1 (N=1/2), w/ 2-step RACH
Valid SSB (Msg.3 repetition) = SSB0

FIG. 15

N<1 (N=1/2), w/o 2-step RACH (Q=0)
Valid SSB (Msg.3 repetition) = SSB0
PRACH mask for Msg.3 repetition = RO index 0

SSB 0

SSB 1

Offset

RO    RO    RO    RO

R    P    R    R    R

...

EP 4 412 357 A1

FIG. 16

FIG. 17

gNB or ng - eNB

Inter Cell RRM

RB Control

Connection Mobility Cont.

Radio Admission Control

Measurement
Configuration & Provision

Dynamic Resource
Allocation (Scheduler)

NG - RAN

AMF

NAS Security

Idle State Mobility
Handling

UPF

Mobility Anchoring

PDU Handling

SMF

UE IP address
allocation

PDU Session
Control

internet

5 GC

FIG. 18

FIG. 19

**Enhanced Mobile Broadband**

Gigabytes in a second

3D video, UHD screens

Work and play in the cloud

Smart Home/Building

Augmented reality

Mission critical application e.g. e-health

Smart City

Industry automation

Self Driving Car

**Massive Machine Type Communication**

**Ultra-reliable and Low Latency Communication**

FIG. 20

FIG. 21

## INTERNATIONAL SEARCH REPORT

| | International application No. |
|---|---|
| | **PCT/JP2022/020566** |

**A. CLASSIFICATION OF SUBJECT MATTER**

*H04W 72/04*(2009.01)i; *H04W 76/10*(2018.01)i; *H04W 74/08*(2009.01)i
FI: H04W76/10; H04W74/08; H04W72/04 136

According to International Patent Classification (IPC) or to both national classification and IPC

**B. FIELDS SEARCHED**

Minimum documentation searched (classification system followed by classification symbols)

H04W72/04; H04W76/10; H04W74/08

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | ZTE CORPORATION. SANECHIPS. Consideration on Msg3 repetition in CE [online]. 3GPP TSG RAN WG2 #115-e R2-2107745. 06 August 2021<br>section 2.7 | 1-3, 9-12 |
| A | | 4-8 |
| X | JP 2020-182116 A (SHARP KK) 05 November 2020 (2020-11-05)<br>paragraph [0110] | 1, 7, 10-12 |
| A | | 2-6, 8, 9 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **20 June 2022** | **05 July 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

| International application No. |
| --- |
| **PCT/JP2022/020566** |

| Patent document cited in search report | Publication date (day/month/year) | Patent family member(s) | Publication date (day/month/year) |
| --- | --- | --- | --- |
| JP 2020-182116 A | 05 November 2020 | WO 2020/218254 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021159516 A

**Non-patent literature cited in the description**

- NR Base Station (BS) radio transmission and reception (Release 15). *3GPP TS38.104 V15.14.0,* June 2021
- **CHINA TELECOM.** New WID on NR coverage enhancements. *RP-202928,* December 2020
- NR Physical channels and modulation (Release 16). *3GPP TS38.211 V16.6.0,* June 2021
- NR Multiplexing and channel coding (Release 16). *3GPP TS38.212 V16.6.0,* June 2021
- NR Physical layer procedures for control (Release 16). *3GPP TS38.213 V16.6.0,* June 2021
- NR Physical layer procedures for data (Release 16). *3GPP TS38.214 V16.6.0,* June 2021
- User Equipment (UE) procedures in Idle mode and RRC Inactive state (Release 16). *3GPP TS38.304 V16.5.0,* June 2021
- NR Medium Access Control (MAC) protocol specification (Release 16). *3GPP TS38.321 V16.5.0,* June 2021
- NR Radio Resource Control (RRC) protocol specification (Release 16). *3GPP TS38.331 V16.5.0,* June 2021
- **ZTE CORPORATION ; SANECHIPS.** Consideration on Msg. 3 repetition in CE. *R2-2107745,* August 2021